(19) Europäisches Patentamt
European Patent Office
Office européen des brevets

(11) EP 2 782 963 B1

(12) **EUROPEAN PATENT SPECIFICATION**

(45) Date of publication and mention of the grant of the patent:
**04.01.2017 Bulletin 2017/01**

(21) Application number: **12818814.1**

(22) Date of filing: **16.11.2012**

(51) Int Cl.:
***C08L 69/00*** *(2006.01)* ***C08K 3/34*** *(2006.01)*
***C08K 3/40*** *(2006.01)* ***C08K 5/42*** *(2006.01)*
***C08K 5/521*** *(2006.01)* ***C08K 7/14*** *(2006.01)*

(86) International application number:
**PCT/IB2012/056512**

(87) International publication number:
**WO 2013/076636 (30.05.2013 Gazette 2013/22)**

(54) **FLAME RETARDANT THERMOPLASTIC POLYCARBONATE COMPOSITIONS**

FLAMMHEMMENDE, THERMOPLASTISCHE POLYCARBONATZUSAMMENSETZUNGEN

COMPOSITIONS THERMOPLASTIQUES IGNIFUGES DE POLYCARBONATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.11.2011 US 201161562001 P**

(43) Date of publication of application:
**01.10.2014 Bulletin 2014/40**

(73) Proprietor: **SABIC Global Technologies B.V.**
**4612 PX Bergen op Zoom (NL)**

(72) Inventors:
- **VAN DE GRAMPEL, Robert Dirk**
  **NL-4612 PX Bergen op Zoom (NL)**
- **VAN DE WETERING, Karin Irene**
  **NL-4612 PX Bergen op Zoom (NL)**
- **VAN DE GRAMPEL, Hendrik Theodorus**
  **NL-4612 PX Bergen op Zoom (NL)**
- **LENS, Jan Pleun**
  **NL-3043 BL Rotterdam (NL)**
- **GOOSSENS, Johannes Martinus Dina**
  **NL-4612 PX Bergen op Zoom (NL)**

(74) Representative: **Modiano, Micaela Nadia et al**
**Modiano & Partners (DE)**
**Thierschstrasse 11**
**80538 München (DE)**

(56) References cited:
**US-A1- 2005 182 165** **US-A1- 2006 287 422**
**US-A1- 2011 052 895**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 782 963 B1

## Description

BACKGROUND

The present disclosure relates to polycarbonate compositions that have a combination of high flame retardance at low thicknesses, high flow properties, and good impact properties. Also disclosed herein are methods for preparing and/or using the same.

Polycarbonates (PC) are synthetic engineering thermoplastic resins, and are a useful class of polymers having many beneficial properties. With their strength and clarity, polycarbonate resins offer many significant advantages and are used for a number of different commercial applications, including electronic engineering (E&E) parts, mechanical parts and so on.

Because of their broad use, it is desirable to provide polycarbonates having retarded flammability. Many known flame retardant agents used with polycarbonates contain bromide and/or chloride. These types of flame retardant agents are increasingly subject to regulatory restrictions. Nonhalogenated flame retardants are also known, including various fillers, phosphorus-containing compounds, and certain salts. It is difficult to obtain high flame retardance in thin wall samples using these agents. Besides inorganic salts, organosilicones and organo-/nanoclays have also been shown to have a beneficial effect on flame retardance. However, most nanoclays commercially available today contain highly basic organic moieties which degrade the molecular weight of the polycarbonate.

Desirably, polycarbonate compositions should also have good flow properties. Good flow properties reflect how easily the polymeric composition can be poured into a mold for forming the shape of the part. Better impact properties are also desirable. A conventional way of increasing stiffness is by increasing the weight average molecular weight of the polymer, but this typically also reduces the flow properties and makes it difficult to fill complex or thin-walled molds.

It would be desirable to provide a composition that has a balance of improved flame retardance at low thicknesses (e.g. 1 mm or below), good flow properties, and good impact strength.

BRIEF DESCRIPTION

The present invention relates to a flame retardant thermoplastic composition as defined in claim 1 and to a molded article thereof as defined in claim 15.

DETAILED DESCRIPTION

The present disclosure may be understood more readily by reference to the following detailed description of desired embodiments and the examples included therein. In the following specification and the claims which follow, reference will be made to a number of terms which shall be defined to have the following meanings.

The singular forms "a," "an," and "the" include plural referents unless the context clearly dictates otherwise.

As used in the specification and in the claims, the term "comprising" may include the embodiments "consisting of" and "consisting essentially of."

Numerical values in the specification and claims of this application, particularly as they relate to polymers or polymer compositions, reflect average values for a composition that may contain individual polymers of different characteristics. Furthermore, unless indicated to the contrary, the numerical values should be understood to include numerical values which are the same when reduced to the same number of significant figures and numerical values which differ from the stated value by less than the experimental error of conventional measurement technique of the type described in the present application to determine the value.

All ranges disclosed herein are inclusive of the recited endpoint and independently combinable (for example, the range of "from 2 grams to 10 grams" is inclusive of the endpoints, 2 grams and 10 grams, and all the intermediate values). The endpoints of the ranges and any values disclosed herein are not limited to the precise range or value; they are sufficiently imprecise to include values approximating these ranges and/or values.

As used herein, approximating language may be applied to modify any quantitative representation that may vary without resulting in a change in the basic function to which it is related. Accordingly, a value modified by a term or terms, such as "about" and "substantially," may not be limited to the precise value specified, in some cases. In at least some instances, the approximating language may correspond to the precision of an instrument for measuring the value. The modifier "about" should also be considered as disclosing the range defined by the absolute values of the two endpoints. For example, the expression "from 2 to 4" also discloses the range "from 2 to 4."

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, the aldehyde group -CHO is attached through the carbon of the carbonyl group.

The term "aliphatic" refers to a linear or branched array of atoms that is not cyclic and has a valence of at least one. Aliphatic groups are defined to comprise at least one carbon atom. The array of atoms may include heteroatoms such as nitrogen, sulfur, silicon, selenium and oxygen in the backbone or may be composed exclusively of carbon and hydrogen. Aliphatic groups may be substituted or unsubstituted. Exemplary aliphatic groups include, but are not limited to, methyl, ethyl, isopropyl, isobutyl, hydroxymethyl ($-CH_2OH$), mercaptomethyl ($-CH_2SH$), methoxy, methoxycarbonyl ($CH_3OCO-$), nitromethyl ($-CH_2NO_2$), and thiocarbonyl.

The term "alkyl" refers to a linear or branched array of atoms that is composed exclusively of carbon and hydrogen. The array of atoms may include single bonds, double bonds, or triple bonds (typically referred to as alkane, alkene, or alkyne). Alkyl groups may be substituted (i.e. one or more hydrogen atoms is replaced) or unsubstituted. Exemplary alkyl groups include, but are not limited to, methyl, ethyl, and isopropyl. It should be noted that alkyl is a subset of aliphatic.

The term "aromatic" refers to an array of atoms having a valence of at least one and comprising at least one aromatic group. The array of atoms may include heteroatoms such as nitrogen, sulfur, selenium, silicon and oxygen, or may be composed exclusively of carbon and hydrogen. Aromatic groups are not substituted. Exemplary aromatic groups include, but are not limited to, phenyl, pyridyl, furanyl, thienyl, naphthyl and biphenyl.

The term "aryl" refers to an aromatic radical composed entirely of carbon atoms and hydrogen atoms. When aryl is described in connection with a numerical range of carbon atoms, it should not be construed as including substituted aromatic radicals. For example, the phrase "aryl containing from 6 to 10 carbon atoms" should be construed as referring to a phenyl group (6 carbon atoms) or a naphthyl group (10 carbon atoms) only, and should not be construed as including a methylphenyl group (7 carbon atoms). It should be noted that aryl is a subset of aromatic.

The term "cycloaliphatic" refers to an array of atoms which is cyclic but which is not aromatic. The cycloaliphatic group may include heteroatoms such as nitrogen, sulfur, selenium, silicon and oxygen in the ring, or may be composed exclusively of carbon and hydrogen. A cycloaliphatic group may comprise one or more noncyclic components. For example, a cyclohexylmethyl group ($C_6H_{11}CH_2-$) is a cycloaliphatic functionality, which comprises a cyclohexyl ring (the array of atoms which is cyclic but which is not aromatic) and a methylene group (the noncyclic component). Cycloaliphatic groups may be substituted or unsubstituted. Exemplary cycloaliphatic groups include, but are not limited to, cyclopropyl, cyclobutyl, 1,1,4,4-tetramethylcyclobutyl, piperidinyl, and 2,2,6,6-tetramethylpiperydinyl.

The term "cycloalkyl" refers to an array of atoms which is cyclic but is not aromatic, and which is composed exclusively of carbon and hydrogen. Cycloalkyl groups may be substituted or unsubstituted. It should be noted that cycloalkyl is a subset of cycloaliphatic.

In the definitions above, the term "substituted" refers to at least one hydrogen atom on the named radical being substituted with another functional group, such as alkyl, halogen, -OH, -CN, $-NO_2$, -COOH, etc.

The term "perfluoroalkyl" refers to a linear or branched array of atoms that is composed exclusively of carbon and fluorine.

The term "room temperature" (RT) refers to a temperature of 23°C.

The flame retardant thermoplastic compositions of the present disclosure comprise (A) at least one polycarbonate polymer; (B) a flame retardant additive that contains no bromine or chlorine; (C) glass fibers; (D) talc; and (E) an acid stabilizer. The flame retardant additive is present in an amount of at least 0.05 percent by weight of the composition. These thermoplastic compositions have a combination of desirable properties, particularly high flame retardance (e.g. UL94 V0), good flow properties (e.g. MVR), and good impact properties (e.g. INI).

As used herein, the terms "polycarbonate" and "polycarbonate polymer" mean compositions having repeating structural carbonate units of the formula (1):

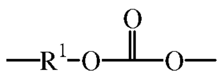

(1)

in which at least 60 percent of the total number of $R^1$ groups are aromatic organic radicals and the balance thereof are aliphatic, alicyclic, or aromatic radicals. An ester unit (-COO-) is not considered a carbonate unit, and a carbonate unit is not considered an ester unit. In one embodiment, each $R^1$ is an aromatic organic radical, for example a radical of the formula (2):

$$-A^1-Y^1-A^2- \qquad (2)$$

wherein each of $A^1$ and $A^2$ is a monocyclic divalent aryl radical and $Y^1$ is a bridging radical having one or two atoms that separate $A^1$ from $A^2$. In an exemplary embodiment, one atom separates $A^1$ from $A^2$. Illustrative non-limiting examples of radicals of this type are -O-, -S-, -S(O)-, $-S(O_2)-$ -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and ada-

mantylidene. The bridging radical $Y^1$ may be a hydrocarbon group or a saturated hydrocarbon group such as methylene, cyclohexylidene, or isopropylidene.

Polycarbonates may be produced by the interfacial reaction of dihydroxy compounds having the formula $HO-R^1-OH$, wherein $R^1$ is as defined above. Dihydroxy compounds suitable in an interfacial reaction include the dihydroxy compounds of formula (A) as well as dihydroxy compounds of formula (3)

$$HO-A^1-Y^1-A^2-OH \qquad (3)$$

wherein $Y^1$, $A^1$ and $A^2$ are as described above. Also included are bisphenol compounds of general formula (4):

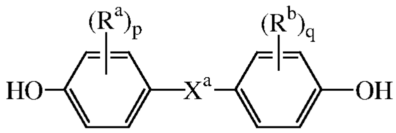

(4)

wherein $R^a$ and $R^b$ each represent a halogen atom or a monovalent hydrocarbon group and may be the same or different; p and q are each independently integers of 0 to 4; and $X^a$ represents one of the groups of formula (5):

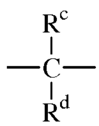

or

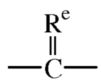

(5)

wherein $R^c$ and $R^d$ each independently represent a hydrogen atom or a monovalent linear or cyclic hydrocarbon group and $R^e$ is a divalent hydrocarbon group.

Specific examples of the types of bisphenol compounds that may be represented by formula (3) include 1,1-bis(4-hydroxyphenyl) methane, 1,1-bis(4-hydroxyphenyl) ethane, 2,2-bis(4-hydroxyphenyl) propane (hereinafter "bisphenol-A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, and 1,1-bis(4-hydroxy-t-butylphenyl) propane. Combinations comprising at least one of the foregoing dihydroxy compounds may also be used.

Branched polycarbonates are also useful, as well as blends of a linear polycarbonate and a branched polycarbonate. The branched polycarbonates may be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitic trichloride, tris-p-hydroxy phenyl ethane (THPE), isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents may be added at a level of 0.05 wt% to 2.0 wt%.

"Polycarbonates" and "polycarbonate polymers" as used herein further includes blends of polycarbonates with other copolymers comprising carbonate chain units. An exemplary copolymer is a polyester carbonate, also known as a copolyester-polycarbonate. Such copolymers further contain, in addition to recurring carbonate chain units of the formula (1), repeating units of formula (6)

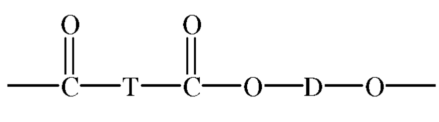

(6)

wherein D is a divalent radical derived from a dihydroxy compound, and may be, for example, a $C_{2-10}$ alkylene radical, a $C_{6-20}$ alicyclic radical, a $C_{6-20}$ aromatic radical or a polyoxyalkylene radical in which the alkylene groups contain 2 to 6 carbon atoms, specifically 2, 3, or 4 carbon atoms; and T is a divalent radical derived from a dicarboxylic acid, and may be, for example, a $C_{2-10}$ alkylene radical, a $C_{6-20}$ alicyclic radical, a $C_{6-20}$ alkyl aromatic radical, or a $C_{6-20}$ aromatic radical.

In one embodiment, D is a $C_{2-6}$ alkylene radical. In another embodiment, D is derived from an aromatic dihydroxy compound of formula (7):

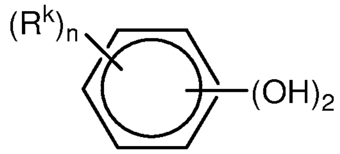

(7)

wherein each $R^k$ is independently a $C_{1-10}$ hydrocarbon group, and n is 0 to 4. The halogen is usually bromine. Examples of compounds that may be represented by the formula (7) include resorcinol, substituted resorcinol compounds such as 5-methyl resorcinol, 5-phenyl resorcinol, 5-cumyl resorcinol, or the like; catechol; hydroquinone; substituted hydroquinones such as 2-methyl hydroquinone, 2-t-butyl hydroquinone, 2-phenyl hydroquinone, 2-cumyl hydroquinone, 2,3,5,6-tetramethyl hydroquinone, or the like; or combinations comprising at least one of the foregoing compounds.

Examples of aromatic dicarboxylic acids that may be used to prepare the polyesters include isophthalic or terephthalic acid, 1,2-di(p-carboxyphenyl)ethane, 4,4'-dicarboxydiphenyl ether, 4,4'-bisbenzoic acid, and mixtures comprising at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or mixtures thereof.

In other embodiments, poly(alkylene terephthalates) may be used. Specific examples of suitable poly(alkylene terephthalates) are poly(ethylene terephthalate) (PET), poly(1,4-butylene terephthalate) (PBT), poly(ethylene naphthanoate) (PEN), poly(butylene naphthanoate), (PBN), (polypropylene terephthalate) (PPT), polycyclohexanedimethanol terephthalate (PCT), and combinations comprising at least one of the foregoing polyesters.

Copolymers comprising alkylene terephthalate repeating ester units with other ester groups may also be useful. Useful ester units may include different alkylene terephthalate units, which can be present in the polymer chain as individual units, or as blocks of poly(alkylene terephthalates). Specific examples of such copolymers include poly(cyclohexanedimethylene terephthalate)-co-poly(ethylene terephthalate), abbreviated as PETG where the polymer comprises greater than or equal to 50 mol% of poly(ethylene terephthalate), and abbreviated as PCTG where the polymer comprises greater than 50 mol% of poly(1,4-cyclohexanedimethylene terephthalate).

Poly(cycloalkylene diester)s may also include poly(alkylene cyclohexanedicarboxylate)s. Of these, a specific example is poly(1,4-cyclohexanedimethanol-1,4-cyclohexanedicarboxylate) (PCCD), having recurring units of formula (8):

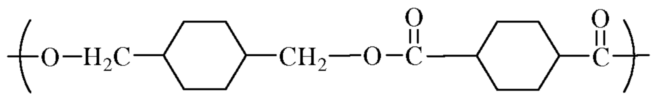

(8)

wherein, as described using formula (6), $R^2$ is a 1,4-cyclohexanedimethylene group derived from 1,4-cyclohexanedimethanol, and T is a cyclohexane ring derived from cyclohexanedicarboxylate or a chemical equivalent thereof, and may comprise the cis-isomer, the trans-isomer, or a combination comprising at least one of the foregoing isomers.

Another exemplary copolymer comprises polycarbonate blocks and polydiorganosiloxane blocks, also known as a polycarbonate-polysiloxane copolymer. The polycarbonate blocks in the copolymer comprise repeating structural units of formula (1) as described above, for example wherein $R^1$ is of formula (2) as described above. These units may be derived from reaction of dihydroxy compounds of formula (3) as described above.

The polydiorganosiloxane blocks comprise repeating structural units of formula (9) (sometimes referred to herein as 'siloxane'):

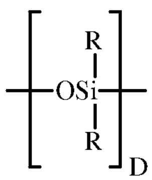

(9)

wherein each occurrence of R is same or different, and is a $C_{1-13}$ monovalent organic radical. For example, R may be a $C_1$-$C_{13}$ alkyl group, $C_1$-$C_{13}$ alkoxy group, $C_2$-$C_{13}$ alkenyl group, $C_2$-$C_{13}$ alkenyloxy group, $C_3$-$C_6$ cycloalkyl group, $C_3$-$C_6$ cycloalkoxy group, $C_6$-$C_{10}$ aryl group, $C_6$-$C_{10}$ aryloxy group, $C_7$-$C_{13}$ aralkyl group, $C_7$-$C_{13}$ aralkoxy group, $C_7$-$C_{13}$ alkaryl group, or $C_7$-$C_{13}$ alkaryloxy group. Combinations of the foregoing R groups may be used in the same copolymer.

Generally, D may have an average value of 2 to 1000, specifically 2 to 500, more specifically 10 to 75. Where D is of a lower value, e.g., less than 40, it may be desirable to use a relatively larger amount of the polycarbonate-polysiloxane copolymer. Conversely, where D is of a higher value, e.g., greater than 40, it may be necessary to use a relatively lower amount of the polycarbonate-polysiloxane copolymer.

In one embodiment, the polydiorganosiloxane blocks are provided by repeating structural units of formula (10):

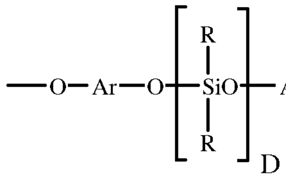

(10)

wherein D is as defined above; each R may be the same or different, and is as defined above; and Ar may be the same or different, and is a substituted or unsubstituted $C_6$-$C_{30}$ arylene radical, wherein the bonds are directly connected to an aromatic moiety. Suitable Ar groups in formula (10) may be derived from a $C_6$-$C_{30}$ dihydroxyarylene compound, for example a dihydroxyarylene compound of formula (3), (4), or (7) above. Combinations comprising at least one of the foregoing dihydroxyarylene compounds may also be used.

Such units may be derived from the corresponding dihydroxy compound of the following formula (11):

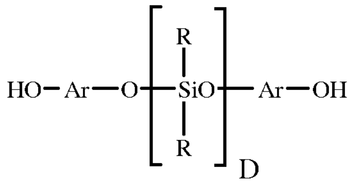

(11)

wherein Ar and D are as described above. Compounds of this formula may be obtained by the reaction of a dihydroxyarylene compound with, for example, an alpha, omega-bisacetoxypolydiorangonosiloxane under phase transfer conditions.

In another embodiment the polydiorganosiloxane blocks comprise repeating structural units of formula (12):

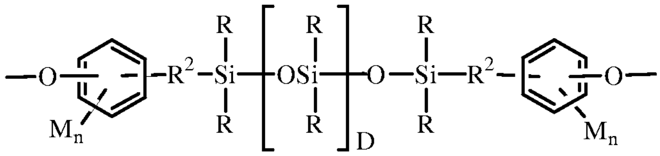

(12)

wherein R and D are as defined above. $R^2$ in formula (12) is a divalent $C_2$-$C_8$ aliphatic group. Each M in formula (12) may be the same or different, and may be cyano, nitro, $C_1$-$C_8$ alkylthio, $C_1$-$C_8$ alkyl, $C_1$-$C_8$ alkoxy, $C_2$-$C_8$ alkenyl, $C_2$-$C_8$ alkenyloxy group, $C_3$-$C_8$ cycloalkyl, $C_3$-$C_8$ cycloalkoxy, $C_6$-$C_{10}$ aryl, $C_6$-$C_{10}$ aryloxy, $C_7$-$C_{12}$ aralkyl, $C_7$-$C_{12}$ aralkoxy, $C_7$-$C_{12}$ alkaryl, or $C_7$-$C_{12}$ alkaryloxy, wherein each n is independently 0, 1, 2, 3, or 4.

In one embodiment, M is an alkyl group such as methyl, ethyl, or propyl, an alkoxy group such as methoxy, ethoxy, or propoxy, or an aryl group such as phenyl, or tolyl; $R^2$ is a dimethylene, trimethylene or tetramethylene group; and R is a $C_{1-8}$ alkyl, haloalkyl such as trifluoropropyl, cyanoalkyl, or aryl such as phenyl or tolyl. In another embodiment, R is methyl, or a mixture of methyl and phenyl. In still another embodiment, M is methoxy, n is one, $R^2$ is a divalent $C_1$-$C_3$ aliphatic group, and R is methyl.

These units may be derived from the corresponding dihydroxy polydiorganosiloxane (13):

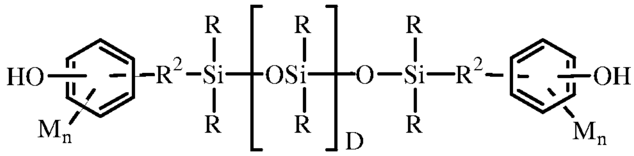

(13)

wherein R, D, M, $R^2$, and n are as described above.

Such dihydroxy polysiloxanes can be made by effecting a platinum catalyzed addition between a siloxane hydride of the formula (14),

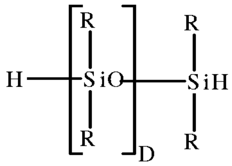

(14)

wherein R and D are as previously defined, and an aliphatically unsaturated monohydric phenol. Suitable aliphatically unsaturated monohydric phenols included, for example, eugenol, 2-alkylphenol, 4-allyl-2-methylphenol, 4-allyl-2-phenylphenol, 4-allyl-2-t-butoxyphenol, 4-phenyl-2-phenylphenol, 2-methyl-4-propylphenol, 2-allyl-4,6-dimethylphenol, 2-allyl-6-methoxy-4-methylphenol and 2-allyl-4,6-dimethylphenol. Mixtures comprising at least one of the foregoing may also be used.

Suitable polycarbonates can be manufactured by processes known in the art, such as interfacial polymerization and melt polymerization. Although the reaction conditions for interfacial polymerization may vary, an exemplary process generally involves dissolving or dispersing a dihydric phenol reactant in aqueous caustic soda or potash, adding the resulting mixture to a suitable water-immiscible solvent medium, and contacting the reactants with a carbonate precursor in the presence of a suitable catalyst such as triethylamine or a phase transfer catalyst, under controlled pH conditions, e.g., 8 to 10. Generally, in the melt polymerization process, polycarbonates may be prepared by co-reacting, in a molten state, the dihydroxy reactant(s) and a diaryl carbonate ester, such as diphenyl carbonate, in the presence of a transesterification catalyst in a Banbury* mixer, twin screw extruder, or the like to form a uniform dispersion. Volatile monohydric phenol is removed from the molten reactants by distillation and the polymer is isolated as a molten residue.

In specific embodiments, the polycarbonate polymer (A) is derived from a dihydroxy compound having the structure of Formula (I):

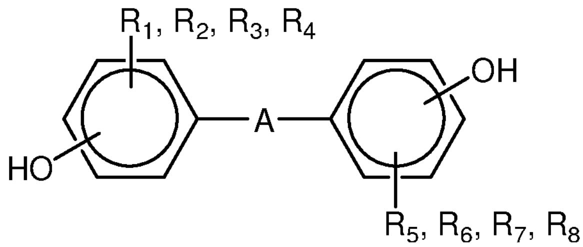

Formula (I)

wherein $R_1$ through $R_8$ are each independently selected from hydrogen, nitro, cyano, $C_1$-$C_{20}$ alkyl, $C_4$-$C_{20}$ cycloalkyl, and $C_6$-$C_{20}$ aryl; and A is selected from a bond, -O-, -S-, $-SO_2-$, $C_1$-$C_{12}$ alkyl, $C_6$-$C_{20}$ aromatic, and $C_6$-$C_{20}$ cycloaliphatic.

In specific embodiments, the dihydroxy compound of Formula (I) is 2,2-bis(4-hydroxyphenyl) propane (i.e. bisphenol-A or BPA). Other illustrative compounds of Formula (I) include: 2,2-bis(4-hydroxy-3-isopropylphenyl)propane; 2,2-bis(3-t-butyl-4-hydroxyphenyl)propane; 2,2-bis(3-phenyl-4-hydroxyphenyl)propane; 1,1-bis(4-hydroxyphenyl)cyclohexane; 4,4'dihydroxy-1,1-biphenyl; 4,4'-dihydroxy-3,3'-dimethyl-1,1-biphenyl; 4,4'-dihydroxy-3,3 '-dioctyl-1,1 -biphenyl; 4,4'-dihydroxydiphenylether; 4,4'-dihydroxydiphenylthioether; and 1,3 -bis(2-(4-hydroxyphenyl)-2-propyl)benzene.

In more specific embodiments, the polycarbonate polymer (A) is a bisphenol-A homopolymer. The polycarbonate polymer may have a weight average molecular weight (Mw) of from 15,000 to 35,000 Daltons, according to polycarbonate standards, including a range of from 15,000 to 22,00 Daltons. The polycarbonate polymer can be a linear or branched polycarbonate, and in more specific embodiments is a linear polycarbonate.

The thermoplastic compositions of the present disclosure also include a flame retardant additive (B) that does not contain bromine or chlorine. The flame retardant additive (B) is present in the thermoplastic composition in an amount of at least 0.05 percent by weight of the thermoplastic composition. More than one flame retardant additive may be present, i.e. combinations of such additives are contemplated.

The flame retardant additive is potassium perfluorobutane sulfonate ("Rimar salt") potassium diphenylsulfon-3-sulfonate ("KSS") and/or sodium toluene sulfonate (NaTS).

The thermoplastic composition also comprises glass fibers (C). The term "glass" here refers generally to a material, natural or synthetic, which contains silicon dioxide ($SiO_2$) or silica as its main material. Glass fillers may include,

for example, silicate spheres, cenospheres, aluminosilicate (armosspheres), or the like, or fiberglass. The glass filler may take any shape, for example as glass spheres, glass fibers or "whiskers", or glass flakes.

The thermoplastic composition also comprises talc (D). The talc may take any shape, including fibrous, modular, needle shaped, lamellar talc, or the like. The talc may have a mean radius of from 1 to 3 nanometers. The talc may alternatively have a particle size of from 0.5 micrometers ($\mu$m) to 15 $\mu$m, including from 0.8 $\mu$m to 5 $\mu$m, or from 1 $\mu$m to 2 $\mu$m.

The thermoplastic composition also comprises an acid stabilizer (E). The acid stabilizer counteracts the basicity of the talc (D), and may also be considered a talc neutralizer. This reduces the amount of degradation of the polycarbonate polymer (A). The identity of the acid stabilizer is not particularly limited. Acid stabilizers include acids, acid salts, esters of acids or their combinations. The addition of the acid or its salt or ester often deactivates catalytically active species such as alkali metals. Particularly useful classes of acids, acid salts and esters of acids are those derived from a phosphorous containing acid such as phosphoric acid, phosphorous acid, hypophosphorous acid, hypophosphoric acid, phosphinic acid, phosphonic acid, metaphosphoric acid, hexametaphosphoric acid, thiophosphoric acid, fluorophosphoric acid, difluorophosphoric acid, fluorophosphorous acid, difluorophosphorous acid, fluorohypophosphorous acid, fluorohypophosphoric acid or their combinations. In one embodiment a combination of a phosphorous containing acid and an ester of a phosphorous containing acid is used. Alternatively, acids, acid salts and esters of acids, such as, for example, sulphuric acid, sulphites, zinc phosphate, mono calcium phosphate, and the like, may be used. In particular embodiments, the acid stabilizer is phosphorous acid ($H_3PO_3$), phosphoric acid ($H_3PO_4$), zinc phosphate ($Zn_3(PO_4)_2$), zinc dihydrogen phosphate ($ZnH_4P_2O_8$), mono sodium phosphate ($NaH_2PO_4$), or sodium acid pyrophosphate ($Na_2H_2P_2O_7$). The weight ratio of acid (E) to talc (D) may be from 0.01 to 0.05, including 0.03.

In embodiments, the thermoplastic composition comprises 30 wt% to 95 wt% of the at least one polycarbonate polymer (A); at least 0.05 wt% to 1.0 wt% of the flame retardant additive (B); 2 wt% to 35 wt% of the glass fibers (C); 2 wt% to 20 wt% of the talc (D); and 0.005 wt% to 0.4 wt% of the acid stabilizer (E). These values are based on the total weight of the thermoplastic composition. It should also be noted that the at least one polycarbonate polymer (A) may be a blend of two or more polycarbonate polymers having different weight average molecular weights, and the recited 30 wt% to 95 wt% refers to any one of the polycarbonates in the blend.

In more specific embodiments, the thermoplastic composition comprises 60 wt% to 90 wt% of the polycarbonate polymer (A), or 75 wt% to 90 wt% of the polycarbonate polymer (A).

In more specific embodiments, the thermoplastic composition comprises 0.2 wt% to 0.3 wt% of the flame retardant additive (B), or 0.05 wt% to 0.7 wt%.

In more specific embodiments, the thermoplastic composition comprises 4 wt% to 20 wt% of the glass fibers (C).

In more specific embodiments, the thermoplastic composition comprises 4 wt% to 10 wt% of the talc (D).

In more specific embodiments, the thermoplastic composition comprises 0.06 wt% to 0.5 wt% of the acid stabilizer (E).

The present disclosure is partially based on the discovery that there is a synergy between the glass fibers, talc, and acid stabilizer. This makes it possible to attain UL94 V0 performance at low thicknesses, including at thicknesses of 1.2 mm, 1.0 mm and 0.8 mm. In particular embodiments, the weight ratio of the talc (D) to glass fibers (C) is greater than 0.1, and the composition contains only 9 wt% to 25 wt% of the glass fibers and the talc combined (i.e. C+D). In other particular embodiments, the weight ratio of talc to glass fibers is greater than 0.65, and the composition contains only 9 wt% to 15 wt% of the glass fibers and the talc combined. In other embodiments, the ratio of the acid stabilizer (E) to the talc (D) is 0.06 mmoles acid stabilizer per gram of talc (mmol/gram talc) to 0.03 mmol/gram talc.

In another set of embodiments, the weight ratio of talc to glass fibers is 2 or less; the composition contains only 9 wt% to 15 wt% of the glass fibers and the talc combined; and the ratio of the acid neutralizer to the talc is 0.06 mmol/gram talc to 0.03 mmol/gram talc.

The flame retardant thermoplastic compositions of the present disclosure have a combination of good impact strength and other mechanical properties. The thermoplastic compositions may have a melt volume rate (MVR) of at least 4 cc/10 min when measured according to ISO 1133 at 300°C and a 1.2 kg load; a flexural modulus of at least 3.0 GPa when measured according to ISO 178; a notched Izod impact strength of 50 J/m or greater when measured according to ASTM D256; a Vicat B120 softening temperature of 135°C to 160°C when measured according to ISO 306; and/or a notched Izod impact strength of 12 to 25 kJ/m$^2$ when measured according to ISO 180 at room temperature and at a thickness of 3 mm. The compositions may have any combination of these properties. It should be noted that some of the properties (e.g. notched Izod) are measured using articles made from the thermoplastic composition; however, such properties are described as belonging to the thermoplastic composition for ease of reference.

In further embodiments, the thermoplastic compositions may have a melt volume rate (MVR) of 4 to 25 cc/10 min, or 5 to 25 cc/10 min, or 10 to 30 cc/10 min, or 10 to 25 cc/10 min, when measured according to ISO 1133 at 300°C and a 1.2 kg load.

In further embodiments, the thermoplastic compositions may have a flexural modulus of 3.4 GPa to 4.2 GPa, or 3.3 GPa to 3.5 GPa, or 3.0 GPa to 8.5 GPa, or 3.0 GPa to 6.5 GPa, when measured according to ISO 178.

In further embodiments, the thermoplastic compositions may have a notched Izod impact strength of 50 J/m or greater, 60 to 95 J/m, or 55 to 200 J/m, when measured according to ASTM D256. In more specific embodiments, these ranges of impact strength are achieved when the thermoplastic composition contains 12 wt% or less of the glass fibers (C) and the talc (D) combined.

In further embodiments, the thermoplastic compositions may have a notched Izod impact strength of 5 to 25 $kJ/m^2$, or 12 to 25 $kJ/m^2$ when measured according to ISO 180 at room temperature and at a thickness of 3 mm.

In some specific combinations, the thermoplastic composition has a melt volume rate (MVR) of 10 to 30 cc/10 min when measured according to ISO 1133 at 300°C and a 1.2 kg load; a flexural modulus of at least 3.0 GPa when measured according to ISO 178; a Vicat B120 softening temperature of 135 to 160°C when measured according to ISO 306; and a notched Izod impact strength of at least 60 J/m or greater when measured at room temperature per ASTM D256.

In another set of combinations, the thermoplastic composition has a melt volume rate (MVR) of 5 to 25 cc/10 min when measured according to ISO 1133 at 300°C and a 1.2 kg load; a Vicat B120 softening temperature of 135 to 145°C when measured according to ISO 306; and a flexural modulus of 3.4 GPa to 4.2 GPa when measured according to ISO 178.

In still another set of combinations, the thermoplastic composition has a melt volume rate (MVR) of 10 to 25 cc/10 min when measured according to ISO 1133 at 300°C and a 1.2 kg load; a flexural modulus of 3.3 GPa to 3.5 GPa when measured according to ISO 178; and a notched Izod impact strength of at least 55 J/m when measured at room temperature per ASTM D256.

In another set of embodiments, the thermoplastic composition has a melt volume rate (MVR) of at least 4 cc/10 min when measured according to ISO 1133 at 300°C and a 1.2 kg load; a flexural modulus of at least 3.0 GPa when measured according to ISO 178; and a notched Izod impact strength of 12 to 25 $kJ/m^2$ when measured at room temperature and at a thickness of 3 mm per ISO 180.

In some embodiments, the polymeric composition may further comprise a polycarbonate-polysiloxane copolymer (F). The copolymer (F) is present in an amount of greater than zero to 70 wt% of the thermoplastic composition, or greater than zero to at most 18 wt% of the composition. The structure of this copolymer has been previously discussed above. In specific embodiments, the polycarbonate-polysiloxane copolymer (F) is present in an amount of greater than zero to at most 6 wt% of the thermoplastic composition, or in an amount of 6 wt% to 12 wt% of the composition. The polycarbonate-polysiloxane copolymer (F) in some embodiments contains 4 wt% to 25 wt% siloxane units, based on the weight of the copolymer. Using other methods of measurement, the thermoplastic composition may contain up to 3.5 wt% of siloxane units, based on the weight of the composition.

The thermoplastic compositions may also include various additives such as antidrip agents, stabilizers, colorants, and the like, with the proviso that the additives do not adversely affect the desired properties of the thermoplastic compositions. Mixtures of additives may be used. Such additives may be mixed at a suitable time during the mixing of the components for forming the thermoplastic composition.

Anti-drip agents may be for example a fibril forming or non-fibril forming fluoropolymer such as polytetrafluoroethylene (PTFE). The anti-drip agent may be encapsulated by a rigid copolymer as described above, for example SAN. PTFE encapsulated in SAN is known as TSAN. Encapsulated fluoropolymers may be made by polymerizing the encapsulating polymer in the presence of the fluoropolymer, for example, in an aqueous dispersion. Other polymeric anti-drip agents include polyphenylene ethers (PPE). Some inorganic anti-drip agents include silica, quartz, aluminum silicate, mica, alumina, aluminum hydroxide, calcium carbonate, silicon carbide, silicon nitride, boron nitride, titanium oxide, and iron oxide. The anti-drip agent may be present in an amount of 0.01 to 5 wt% of the composition, including 0.2 to 1.0 wt%.

The thermoplastic composition may comprise a primary antioxidant or "stabilizer" (e.g., a hindered phenol and/or secondary aryl amine) and, optionally, a secondary antioxidant (e.g., a phosphate and/or thioester). Suitable antioxidant additives include, for example, organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations comprising at least one of the foregoing antioxidants. Antioxidants are generally used in amounts of 0.01 to 1 parts by weight, optionally 0.05 to 0.5 parts by weight, based on 100 parts by weight of the polymeric components of the thermoplastic composition.

Suitable heat stabilizer additives include, for example, organophosphites such as triphenyl phosphite, tris-(2,6-dimethylphenyl)phosphite, tris-(mixed mono-and dinonylphenyl)phosphite or the like; phosphonates such as dimethylbenzene phosphonate or the like, phosphates such as trimethyl phosphate, or the like, or combinations comprising at

least one of the foregoing heat stabilizers. Heat stabilizers are generally used in amounts of 0.01 to 5 parts by weight, optionally 0.05 to 0.3 parts by weight, based on 100 parts by weight of the polymeric components of the thermoplastic composition.

Light stabilizers and/or ultraviolet light (UV) absorbing additives may also be used. Suitable light stabilizer additives include, for example, benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone, or the like, or combinations comprising at least one of the foregoing light stabilizers. Light stabilizers are generally used in amounts of 0.01 to 10 parts by weight, optionally 0.1 to 1 parts by weight, based on 100 parts by weight of the polymeric components of the thermoplastic composition.

Suitable UV absorbing additives include for example, hydroxybenzophenones; hydroxybenzotriazoles; hydroxybenzotriazines; cyanoacrylates; oxanilides; benzoxazinones; 2- (2H-benzotriazol-2-yl)-4-(1,1,3,3-tetramethylbutyl)-phenol (CYASORB™ 5411); 2-hydroxy-4-n-octyloxybenzophenone (CYASORB™ 531); 2-[4,6-bis(2,4-dimethylphenyl)-1,3,5-triazin-2-yl]- 5-(octyloxy)-phenol (CYASORB™ 1164); 2,2'-(1,4- phenylene)bis(4H-3,1-benzoxazin-4-one) (CYASORB™ UV- 3638); 1,3-bis[(2-cyano-3,3-diphenylacryloyl)oxy]-2,2-bis[[(2-cyano-3, 3-diphenylacryloyl)oxy]methyl]propane (UVINUL™ 3030); 2,2'-(1,4-phenylene) bis(4H-3,1-benzoxazin-4-one); 1,3-bis[(2-cyano-3,3-diphenylacryloyl)oxy] -2,2-bis[[(2-cyano-3,3-diphenylacryloyl)oxy]methyl]propane; nano-size inorganic materials such as titanium oxide, cerium oxide, and zinc oxide, all with particle size less than 100 nanometers; certain UV absorbers sold under the trade name TINUVIN; or the like, or combinations comprising at least one of the foregoing UV absorbers. UV absorbers are generally used in amounts of 0.1 to 5 parts by weight, based on 100 parts by weight of the polymeric components of the thermoplastic composition.

Plasticizers, lubricants, and/or mold release agents additives may also be used. There is considerable overlap among these types of materials, which include, for example, phthalic acid esters such as dioctyl-4,5-epoxy-hexahydrophthalate; tris-(octoxycarbonylethyl)isocyanurate; tristearin; poly-alpha-olefins; epoxidized soybean oil; silicones, including silicone oils; esters, for example, fatty acid esters such as alkyl stearyl esters, e.g., methyl stearate; stearyl stearate, pentaerythritol tetrastearate, and the like; mixtures of methyl stearate and hydrophilic and hydrophobic nonionic surfactants comprising polyethylene glycol polymers, polypropylene glycol polymers, and copolymers thereof, e.g., methyl stearate and polyethylene-polypropylene glycol copolymers in a suitable solvent; waxes such as beeswax, montan wax, paraffin wax or the like. When present, such materials can be used in amounts of 0.001 to 1 percent by weight, specifically 0.01 to 0.75 percent by weight, more specifically 0.1 to 0.5 percent by weight of the polymeric components of the thermoplastic composition. A preferred mold release is penta erythritol tetra stearate (PETS).

Colorants such as pigment and/or dye additives may also be present. Suitable pigments include for example, inorganic pigments such as metal oxides and mixed metal oxides such as zinc oxide, titanium dioxides, iron oxides or the like; sulfides such as zinc sulfides, or the like; aluminates; sodium sulfo-silicates sulfates, chromates, or the like; carbon blacks; zinc ferrites; ultramarine blue; organic pigments such as azos, di-azos, quinacridones, perylenes, naphthalene tetracarboxylic acids, flavanthrones, isoindolinones, tetrachloroisoindolinones, anthraquinones, anthanthrones, dioxazines, phthalocyanines, and azo lakes; and combinations thereof. Colorants are generally used in amounts of 0.01 to 10 parts by weight, based on 100 parts by weight of the polymeric components of the thermoplastic composition.

Shaped, formed, or molded articles comprising the thermoplastic polycarbonate compositions are also provided. The polycarbonate compositions may be molded into useful shaped articles by a variety of means such as injection molding, extrusion, rotational molding, blow molding and thermoforming to form various molded articles. Such articles may include equipment housings like a smart meter housing, an electric housing, or a PLC (programmable logic controller) housing. The articles may be coated synthetic or natural textiles; coated painted articles; coated dyed articles; coated fluorescent articles; or coated foam articles. The present disclosure further contemplates additional fabrication operations on said articles, such as, but not limited to, molding, in-mold decoration, baking in a paint oven, lamination, and/or thermoforming. The articles may be used widely in automotive industry, home appliances, electrical components, and telecommunications.

The following examples are provided to illustrate the flame retardant thermoplastic polycarbonate compositions, articles, and methods of the present disclosure. The examples are merely illustrative and are not intended to limit the disclosure to the materials, conditions, or process parameters set forth therein.

EXAMPLES

The following materials were used in the Examples:

| Compound | Description | Mw | Trade name | Supplier |
|---|---|---|---|---|
| PC-1 | BPA Polycarbonate homopolymer | 27,000-33,000* | | SABIC's Innovative Plastics business |
| PC-2 | BPA Polycarbonate homopolymer | 20,000-25,000* | | SABIC's Innovative Plastics business |
| PC-3 | BPA Polycarbonate homopolymer | 17,000-21,000* | | SABIC's Innovative Plastics business |
| PC-4 | BPA Polycarbonate homopolymer | 15,000-20,000 | | SABIC's Innovative Plastics business |
| GF | Glass fibers (non-bonding) | | T595 | NEC |
| Talc 1 | Magnesium silicate hydrate | | Jetfine 3 CA | Luzenac |
| $H_3PO_3$ | $H_3PO_3$ solution (45% in $H_2O$) | | phosphorous acid | Quaron |
| Rimar salt | Potassium perfluorobutane sulfone | | FR2025 | 3M |
| TSAN | Polytetrafluoroethylene encapsulated in styrene acrylonitrile copolymer, anti-drip agent | | TSAN | SABIC's Innovative Plastics business |
| PETS | Pentaerythritol tetrastearate, >90% esterified, mold release agent | | PETS G | FACI |
| Phosphite 1 | Tri(di-t-butylphenyl)phosphite, stabilizer | | Irgafos 168 | Chemtura |
| UV stabilizer | 2-(2 hydroxy-5-t-octylphenyl) benzotriazole | | Tinuvin 329 | Chemtura |
| PC-ST | a BPA polycarbonate-polydimethylsiloxane copolymer comprising 20% by weight of siloxane, 80% by weight of BPA, PCP (p-cumylphenol) endcapped | 26,000-34,000 | | SABIC's Innovative Plastics business |
| KSS | Potassium diphenylsulfon-3-sulfonate | | | Arichem |
| NaTS | Sodium toluene sulfonate | | | Arichem |

Melt volume rates (MVR) were measured in accordance with the ISO 1133 standard at 300°C under a load of 1.2 kilogram (kg). The granules were dried for 4 hours at 100°C. MVR is reported in cubic centimeters (cc) of polymer melt /10 minutes.

Vicat softening points were determined in accordance with the ISO 306 standard, under a 50N load at a heating rate of 120°C/hr (B120). It should be noted that Ball Pressure Test (BPT) results at 125°C per IEC 60695 generally correlate with the Vicat temperature. If the Vicat B120 temperature is greater than 135°C, the BPT should also be passed.

Izod notched impact ("INI") measurements were performed on notched 3.2mm Izod bars at 23°C, in accordance with the ASTM D256 standard with a 4 Joule hammer, and are reported in units of J/m. Alternatively, Izod impact measurements were performed on notched 3 mm Izod bars at 23°C (unless otherwise indicated), in accordance with the ISO 180 standard with a 5.5 Joule (J) hammer, and are reported in units of kilojoule per square meter ($kJ/m^2$).

For the flexural modulus, 3-point flexural data was measured on 8 mm ISO bars, in accordance with the ISO 178 standard at 23°C.

Flammability tests were performed following the procedure of Underwriter's Laboratory Bulletin 94 entitled "Tests for Flammability of Plastic Materials, UL94", which is incorporated herein by reference. According to this procedure, the materials were classified as either UL94 V0, UL94 V1, or UL94 V2 on the basis of the test results obtained for five samples. The procedure and criteria for each of these flammability classifications according to UL94 are, briefly, as follows. Multiple specimens (either 5 or 10) are tested per thickness. Some specimens are tested after conditioning for 48 hours at 23°C, 50% relative humidity. The other specimens are tested after conditioning for 168 hours at 70°C. The bar is mounted with the long axis vertical for flammability testing. The specimen is supported such that its lower end is 9.5 mm above the Bunsen burner tube. A blue 19 mm high flame is applied to the center of the lower edge of the specimen for 10 seconds. The time until the flaming of the bar ceases is recorded (T1). If burning ceases, the flame is re-applied for an additional 10 seconds. Again, the time until the flaming of the bar ceases is recorded (T2). If the specimen drips particles, these shall be allowed to fall onto a layer of untreated surgical cotton placed 305 mm below the specimen.

V0: In a sample placed so that its long axis is 180 degrees to the flame, the maximum period of flaming and/or smoldering after removing the igniting flame does not exceed 10 seconds and none of the vertically placed samples produces drips of burning particles that ignite absorbent cotton, and no specimen burns up to the holding clamp after flame or after glow.

In this disclosure, FOT(5) indicates the sum of the flame out time for five bars each lit twice for ten (10) seconds each, for a maximum flame out time of 50 seconds. In this disclosure, FOT(10) indicates the sum of the flame out time for ten bars each lit twice for ten (10) seconds each, for a maximum flame out time of 100 seconds. The total FOT of each bar is the sum of T1 and T2.

Embodiment V1, V2: In a sample placed so that its long axis is 180 degrees to the flame, the average period of flaming and/or smoldering after removing the igniting flame does not exceed 30 seconds and, for a V1 rating, none of the vertically placed samples produces drips of burning particles that ignite absorbent cotton. The V2 standard is the same as V1, except that flaming drips that ignite the cotton are permitted.

The criteria for flammability classifications according to:

| | V0 | V1 | V2 |
|---|---|---|---|
| Individual flame time (sec) | ≦10 | ≦30 | ≦30 |
| Total flame time of 5 specimens (sec) | ≦50 | ≦250 | ≦250 |

The data was also analyzed by calculating the average flame out time, standard deviation of the flame out time and the total number of drips, and by using statistical methods to convert that data to a prediction of the probability of first time pass, or "p(FTP)", that a particular sample formulation would achieve a "pass" rating in the conventional UL94 V0 or V1 testing of 5 bars. The probability of a first time pass on a first submission (pFTP) may be determined according to the formula:

$$p(FTP) = (P_{t1>mbt,\ n=0} \times P_{t2>mbt,\ n=0} \times P_{total<=mtbt} \times P_{drip,\ n=0})$$

where $P_{t1>mbt,\ n=0}$ is the probability that no first burn time exceeds a maximum burn time value, $P_{t2>mbt,\ n=0}$ is the probability that no second burn time exceeds a maximum burn time value, $P_{total<=mtbt}$ is the probability that the sum of the burn times is less than or equal to a maximum total burn time value, and $P_{drip,\ n=0}$ is the probability that no specimen exhibits dripping during the flame test. First and second burn time refer to burn times after a first and second application of the flame, respectively.

The probability that no first burn time exceeds a maximum burn time value, $P_{t1>mbt,\ n=0}$, may be determined the formula: $P_{tl>mbt,\ n=0} = (1-P_{t1>mbt})^5$ where $P_{t1>mbt}$ is the area under the log normal distribution curve for t1>mbt, and where the exponent "5" relates to the number of bars tested. The probability that no second burn time exceeds a maximum burn time value may be determined from the formula: $P_{t2>mbt,\ n=0} = (1-P_{t2>mbt})$ where $P_{t2>mbt}$ is the area under the normal distribution curve for t2>mbt. As above, the mean and standard deviation of the burn time data set are used to calculate the normal distribution curve. For the UL-94 V0 rating, the maximum burn time is 10 seconds. For a V1 or V2 rating the maximum burn time is 30 seconds. The probability $P_{drip,\ n=0}$ that no specimen exhibits dripping during the flame test is an attribute function, estimated by: $(1-P_{drip})^5$ where $P_{drip}$ = (the number of bars that drip/the number of bars tested).

The probability $P_{totai<=mtbt}$ that the sum of the burn times is less than or equal to a maximum total burn time value may be determined from a normal distribution curve of simulated 5-bar total burn times. The distribution may be generated from a Monte Carlo simulation of 1000 sets of five bars using the distribution for the burn time data determined above. Techniques for Monte Carlo simulation are well known in the art. A normal distribution curve for 5-bar total burn

times may be generated using the mean and standard deviation of the simulated 1000 sets. Therefore, $P_{total<=mtbt}$ may be determined from the area under a log normal distribution curve of a set of 1000 Monte Carlo simulated 5-bar total burn time for total<=maximum total burn time. For the UL-94 V0 rating, the maximum total burn time is 50 seconds. For a V1 or V2 rating, the maximum total burn time is 250 seconds.

Preferably, p(FTP) is as close to 1 as possible, for example, greater than or equal to 0.7, or greater than or equal to 0.8 or, more specifically, greater than or equal to 0.90, for maximum flame-retardant performance in UL testing. The p(FTP) ≥ 0.7, and specifically, p(FTP) ≥ 0.85, is a more stringent standard than merely specifying compliance with the referenced V0 or V1 test.

Examples 1-2

Five comparative examples (Cex-1 to Cex-5) and two Examples (Ex-1 to Ex-2) were made to show the effect of talc addition. Table 1 shows the compositions and their results.

Table 1.

| | | Cex-1 | Cex-2 | Cex-3 | Ex-1 | Cex-4 | Cex-5 | Ex-2 |
|---|---|---|---|---|---|---|---|---|
| PC-2 | % | 88.7 | 88.64 | 86.7 | 86.64 | 88.58 | 84.7 | 84.58 |
| Rimar salt | % | 0.3 | 0.3 | 0.3 | 0.3 | 0.3 | 0.3 | 0.3 |
| TSAN | % | 0.5 | 0.5 | 0.5 | 0.5 | 0.5 | 0.5 | 0.5 |
| Release | % | 0.3 | 0.3 | 0.3 | 0.3 | 0.3 | 0.3 | 0.3 |
| UV stabilizer | % | 0.15 | 0.15 | 0.15 | 0.15 | 0.15 | 0.15 | 0.15 |
| Stabilizer | % | 0.05 | 0.05 | 0.05 | 0.05 | 0.05 | 0.05 | 0.05 |
| $H_3PO_3$ | % | | 0.06 | | 0.06 | 0.12 | | 0.12 |
| Talc | % | | | 2 | 2 | | 4 | 4 |
| Glass fiber | % | 10 | 10 | 10 | 10 | 10 | 10 | 10 |
| Talc:glass fiber ratio | | | | 0.2 | 0.2 | | 0.4 | 0.4 |
| Acid:talc ratio | | | | | 0.03 | | | 0.03 |
| Physical properties | | | | | | | | |
| MVR | cc/10min | 15.9 | | 14.2 | 10 | | 14.4 | 10 |
| Vicat B120 | °C | 142 | | 141 | 142 | | 141 | 141 |
| INI @ RT | J/m | 71 | | 68 | 79 | | 62 | 80 |
| Flexural modulus | GPa | 3.8 | | 4.0 | 4.3 | | 4.3 | 4.5 |
| UL94 properties 1mm | | | | | | | | |
| FOT 10 bars | sec. | 146 | 98 | 68 | 56 | 134 | 67 | 51 |
| No. of drips | - | 0/10 | 0/10 | 0/10 | 0/10 | 1/10 | 0/10 | 0/10 |
| pFTP (V0) | - | 0.00 | 0.17 | 0.83 | 0.98 | 0.01 | 0.71 | 0.96 |

The polycarbonate used here was of medium molecular weight. Comparing Cex-1 to Cex-3 and Cex-5, the addition of talc resulted in a considerable improvement in flame retardance ("FR") performance, as observed by a reduction in the FOT and an increase in pFTP. At the same time, a small increase in flexural modulus was observed, as was a large drop in INI.

Comparing Ex-1 to Cex-3 and comparing Ex-2 to Cex-5, adding $H_3PO_3$ to the formulations resulted in further improvements in FR and the flexural modulus. Surprisingly, Ex-1 and Ex-2 had improved INI when compared to Cex-1 which contained no talc, because the presence of talc is expected to decrease the INI. Cex-4 showed that the presence of acid in the blend without talc leads to PC degradation, causing drips during the UL94 test. The MVR is still acceptable.

Examples 3-5

Two additional comparative examples (Cex-6 to Cex-7) and three Examples (Ex-3 to Ex-5) provided more information on the benefit from the combination of glass fiber, talc, and acid. Table 2 shows the compositions and their results.

Table 2.

| | | Cex-6 | Cex-7 | Ex-3 | Ex-4 | Ex-5 |
|---|---|---|---|---|---|---|
| PC-2 | % | 88.97 | 78.37 | 86.32 | 83.67 | 81.02 |
| Rimar salt | % | 0.2 | 0.2 | 0.2 | 0.2 | 0.2 |
| TSAN | % | 0.5 | 0.5 | 0.5 | 0.5 | 0.5 |
| Release | % | 0.3 | 0.3 | 0.3 | 0.3 | 0.3 |
| Stabilizer | % | 0.03 | 0.03 | 0.03 | 0.03 | 0.03 |
| $H_3PO_3$ | % | | 0.60 | 0.15 | 0.3 | 0.45 |
| Talc | % | | 20 | 5 | 10 | 15 |
| Glass fiber | % | 10 | | 7.5 | 5 | 2.5 |
| Talc:glass fiber ratio | | | | 0.67 | 2 | 6 |
| Acid:talc ratio | | | 0.03 | 0.03 | 0.03 | 0.03 |
| Physical properties | | | | | | |
| MVR | cc/10min | 14.0 | 13.0 | 9.0 | 7.0 | 10.0 |
| Vicat B120 | °C | 143 | 141 | 142 | 142 | 142 |
| Flexural modulus | GPa | 3.9 | 4.7 | 3.8 | 4.1 | 4.3 |
| UL94 properties 1mm | | | | | | |
| FOT 5 bars | sec. | 69 | 171 | 17 | 16 | 36 |
| No. of drips | - | 0/5 | 3/5 | 0/5 | 0/5 | 0/5 |
| pFTP (V0) | - | 0.01 | 0.00 | 1.00 | 1.00 | 0.87 |

Looking at Cex-6 and Cex-7, if only glass or talc was used, then poor FR was obtained, as reflected in the pFTP. When only talc is used, dripping played a major role in the poor FR performance. Their combined use, as seen in Ex-3 to Ex-5, gave solid V0 performance for 1 mm thickness. The MVR is lower, but still acceptable for manufacturing purposes.

Examples 6-7

Five comparative examples (Cex-8 to Cex-12) and two Examples (Ex-6 to Ex-7) were made with a low molecular weight polymer. Table 3 shows the compositions and their results.

Table 3.

| | | Cex-8 | Cex-9 | Cex-10 | Ex-6 | Cex-11 | Cex-12 | Ex-7 |
|---|---|---|---|---|---|---|---|---|
| PC-3 | % | 88.7 | 88.64 | 86.7 | 86.64 | 88.58 | 84.7 | 84.58 |
| Rimar salt | % | 0.3 | 0.3 | 0.3 | 0.3 | 0.3 | 0.3 | 0.3 |
| TSAN | % | 0.5 | 0.5 | 0.5 | 0.5 | 0.5 | 0.5 | 0.5 |
| Release | % | 0.3 | 0.3 | 0.3 | 0.3 | 0.3 | 0.3 | 0.3 |
| UV stabilizer | % | 0.15 | 0.15 | 0.15 | 0.15 | 0.15 | 0.15 | 0.15 |
| Stabilizer | % | 0.05 | 0.05 | 0.05 | 0.05 | 0.05 | 0.05 | 0.05 |

(continued)

| | | Cex-8 | Cex-9 | Cex-10 | Ex-6 | Cex-11 | Cex-12 | Ex-7 |
|---|---|---|---|---|---|---|---|---|
| $H_3PO_3$ | % | | 0.06 | | 0.06 | 0.12 | | 0.12 |
| Talc | % | | | 2 | 2 | | 4 | 4 |
| Glass fiber | % | 10 | 10 | 10 | 10 | 10 | 10 | 10 |
| Talc:glass fiber ratio | | | | 0.2 | 0.2 | | 0.4 | 0.4 |
| Acid:talc ratio | | | | | 0.03 | | | 0.03 |
| Physical properties | | | | | | | | |
| MVR | cc/10min | 25.1 | | 22.2 | 16.0 | | 18.5 | 14.2 |
| Vicat B120 | °C | 139 | | 140 | 139 | | 139 | 139 |
| INI @ RT | J/m | 59 | | 50 | 68 | | 51 | 60 |
| Flexural modulus | GPa | 3.8 | | 4.0 | 4.0 | | 4.3 | 4.4 |
| UL94 properties 1mm | | | | | | | | |
| FOT 10 bars | sec. | 138 | 181 | 73 | 71 | 273 | 59 | 55 |
| No. of drips | - | 0/10 | 0/10 | 0/10 | 0/10 | 1/10 | 0/10 | 0/10 |
| pFTP (V0) | - | 0.01 | 0.00 | 0.80 | 0.86 | 0.00 | 0.94 | 0.99 |

Similar trends are seen here as in Table 1, with the combination of talc, glass fibers, and acid showing greater INI and flexural modulus. The MVR is greatly increased, and V0 performance is maintained.

Examples 8-12

Several comparative examples (Cex-13 to Cex-25) and five Examples (Ex-8 to Ex-12) were made with higher amounts of glass fiber and different molecular weight polycarbonates to determine the effect. Tables 4-6 show the compositions and their results.

Table 4.

| | | Cex-13 | Cex-14 | Cex-15 | Ex-8 | Cex-16 | Cex-17 | Ex-9 |
|---|---|---|---|---|---|---|---|---|
| PC-2 | % | 78.7 | 78.64 | 76.7 | 76.64 | 78.55 | 73.7 | 73.55 |
| Rimar salt | % | 0.3 | 0.3 | 0.3 | 0.3 | 0.3 | 0.3 | 0.3 |
| TSAN | % | 0.5 | 0.5 | 0.5 | 0.5 | 0.5 | 0.5 | 0.5 |
| Release | % | 0.3 | 0.3 | 0.3 | 0.3 | 0.3 | 0.3 | 0.3 |
| UV stabilizer | % | 0.15 | 0.15 | 0.15 | 0.15 | 0.15 | 0.15 | 0.15 |
| Stabilizer | % | 0.05 | 0.05 | 0.05 | 0.05 | 0.05 | 0.05 | 0.05 |
| $H_3PO_3$ | % | | 0.06 | | 0.06 | 0.15 | | 0.15 |
| Talc | % | | | 2 | 2 | | 5 | 5 |
| Glass fiber | % | 20 | 20 | 20 | 20 | 20 | 20 | 20 |
| Talc:glass fiber ratio | | | | 0.1 | 0.1 | | 0.25 | 0.25 |
| Acid:talc ratio | | | | | 0.03 | | | 0.03 |
| Physical properties | | | | | | | | |
| MVR | cc/10min | 9.4 | | 7.2 | 5.4 | | 6.7 | 4.7 |
| Vicat B120 | °C | 142 | | 141 | 141 | | 140 | 141 |
| INI @ RT | J/m | 66 | | 67 | 94 | | 57 | 92 |

(continued)

| | | | | | | | | |
|---|---|---|---|---|---|---|---|---|
| Physical properties | | | | | | | | |
| Flexural modulus | GPa | 5.7 | | 6.0 | 5.6 | | 6.5 | 6.0 |
| UL94 properties 1mm | | | | | | | | |
| FOT 10 bars | sec. | 150 | 77 | 93 | 63 | 237 | 72 | 58 |
| No. of drips | - | 0/10 | 0/10 | 0/10 | 0/10 | 0/10 | 0/10 | 0/10 |
| pFTP (V0) | - | 0.00 | 0.56 | 0.42 | 0.99 | 0.00 | 1.00 | 0.99 |

Table 5.

| | | Cex-18 | Cex-19 | Cex-20 | Ex-10 | Cex-21 | Cex-22 | Ex-11 |
|---|---|---|---|---|---|---|---|---|
| PC-3 | % | 78.7 | 78.64 | 76.7 | 76.64 | 78.55 | 73.7 | 73.55 |
| Rimar salt | % | 0.3 | 0.3 | 0.3 | 0.3 | 0.3 | 0.3 | 0.3 |
| TSAN | % | 0.5 | 0.5 | 0.5 | 0.5 | 0.5 | 0.5 | 0.5 |
| Release | % | 0.3 | 0.3 | 0.3 | 0.3 | 0.3 | 0.3 | 0.3 |
| UV stabilizer | % | 0.15 | 0.15 | 0.15 | 0.15 | 0.15 | 0.15 | 0.15 |
| Stabilizer | % | 0.05 | 0.05 | 0.05 | 0.05 | 0.05 | 0.05 | 0.05 |
| $H_3PO_3$ | % | | 0.06 | | 0.06 | 0.15 | | 0.15 |
| Talc | % | | | 2 | 2 | | 5 | 5 |
| Glass fiber | % | 20 | 20 | 20 | 20 | 20 | 20 | 20 |
| Talc:glass fiber ratio | | | | 0.1 | 0.1 | | 0.25 | 0.25 |
| Acid:talc ratio | | | | | 0.03 | | | 0.03 |
| Physical properties | | | | | | | | |
| MVR | cc/10min | 11.8 | | 11.6 | 9.3 | | 11.5 | 7.2 |
| Vicat B120 | °C | 139 | | 138 | 138 | | 138 | 138 |
| INI @ RT | J/m | 42 | | 46 | 53 | | 50 | 53 |
| Flexural modulus | GPa | 5.8 | | 5.8 | 5.1 | | 5.4 | 6.5 |
| UL94 properties 1mm | | | | | | | | |
| FOT 10 bars | sec. | 191 | 199 | 682 | 95 | 206 | 557 | 91 |
| No. of drips | - | 0/10 | 0/10 | 0/10 | 0/10 | 0/10 | 0/10 | 0/10 |
| pFTP (V0) | - | 0.00 | 0.00 | 0.00 | 0.56 | 0.00 | 0.00 | 0.37 |

Table 6.

| | | Cex-23 | Cex-24 | Cex-25 | Ex-12 |
|---|---|---|---|---|---|
| PC-2 | % | 68.7 | 68.55 | 63.7 | 63.55 |
| Rimar salt | % | 0.3 | 0.3 | 0.3 | 0.3 |
| TSAN | % | 0.5 | 0.5 | 0.5 | 0.5 |
| Release | % | 0.3 | 0.3 | 0.3 | 0.3 |
| UV stabilizer | % | 0.15 | 0.15 | 0.15 | 0.15 |
| Stabilizer | % | 0.05 | 0.05 | 0.05 | 0.05 |

(continued)

| | | Cex-23 | Cex-24 | Cex-25 | Ex-12 |
|---|---|---|---|---|---|
| $H_3PO_3$ | % | | 0.15 | | 0.15 |
| Talc | % | | | 5 | 5 |
| Glass fiber | % | 30 | 30 | 30 | 30 |
| Talc:glass fiber ratio | | | | 0.17 | 0.17 |
| Acid:talc ratio | | | | | 0.03 |
| Physical properties | | | | | |
| Vicat B120 | °C | 144 | | 141 | 140 |
| INI @ RT | J/m | 80 | | 58 | 82 |
| Flexural modulus | GPa | 8.4 | | 8.5 | 8.0 |
| UL94 properties 1mm | | | | | |
| FOT 10 bars | sec. | 242 | 166 | 118 | 103 |
| No. of drips | - | 0/10 | 0/10 | 0/10 | 0/10 |
| pFTP (V0) | - | 0.00 | 0.00 | 0.06 | 0.22 |

Referring to Table 4, comparing Ex-8 to Cex-13/14/15, again, the benefit resulting from the use of all three ingredients to improve the FR properties is seen. Comparing the Examples of Table 4 to the Examples of Table 3, the Examples in Table 4 have much higher INI and higher flexural modulus, but reduced MVR.

Referring to Table 5, the polycarbonate used here has a lower molecular weight than that used in Table 5. Comparing Ex-10 to Cex-18/19/20, again, the benefit resulting from the use of all three ingredients to improve the FR properties is seen. Comparing the Examples of Table 5 to the Examples of Table 3, where only the amount of glass fibers changed, the Examples in Table 5 have higher MVR and higher flexural modulus, but reduced INI. Comparing the Examples of Table 5 to the Examples of Table 4, where only the molecular weight changed, the Examples in Table 5 have higher MVR, reduced INI, and roughly equivalent flexural modulus.

Referring to Table 6, the 30% glass fibers of Ex-12 did not show V0 performance, mainly due to the large FOT, although this FOT was still better than Cex-23/24/25.

Ex-10, Ex-11, and Ex-12 had pFTP (V0) values below 0.7. This appears to be due mainly to the large FOT. It is believed that the pFTP value can be increased by optimizing molding conditions.

Examples 13-20

The amount of the flame retardant additive was varied, along with the molecular weight of the polycarbonate, to determine the effect. Tables 7A and 7B show the compositions and their results.

Table 7A.

| | | Cex-26 | Ex-13 | Ex-14 | Ex-15 | Ex-16 | Ex-17 |
|---|---|---|---|---|---|---|---|
| PC-2 | % | 89.0 | 88.95 | 88.9 | 88.8 | 88.7 | 88.4 |
| Rimar salt | % | 0 | 0.05 | 0.1 | 0.2 | 0.3 | 0.6 |
| TSAN | % | 0.5 | 0.5 | 0.5 | 0.5 | 0.5 | 0.5 |
| Release | % | 0.3 | 0.3 | 0.3 | 0.3 | 0.3 | 0.3 |
| Stabilizer | % | 0.05 | 0.05 | 0.05 | 0.05 | 0.05 | 0.05 |
| $H_3PO_3$ | % | 0.15 | 0.15 | 0.15 | 0.15 | 0.15 | 0.15 |
| Talc | % | 5 | 5 | 5 | 5 | 5 | 5 |
| Glass fiber | % | 5 | 5 | 5 | 5 | 5 | 5 |
| Talc:glass fiber ratio | | 1 | 1 | 1 | 1 | 1 | 1 |

(continued)

| | | Cex-26 | Ex-13 | Ex-14 | Ex-15 | Ex-16 | Ex-17 |
|---|---|---|---|---|---|---|---|
| Acid:talc ratio | | 0.03 | 0.03 | 0.03 | 0.03 | 0.03 | 0.03 |
| Physical properties | | | | | | | |
| MVR | cc/10min | | 10.8 | 11.1 | 10.7 | 10.4 | |
| Vicat B120 | °C | | 130 | 129 | 129 | 129 | |
| INI @ RT | J/m | | 86 | 94 | 93 | 83 | |
| Flexural modulus | GPa | | 3.5 | 3.4 | 3.3 | 3.3 | |
| UL94 properties 1mm | | | | | | | |
| FOT 10 bars | sec. | 194 | 57 | 23 | 14 | 19 | 37 |
| No. of drips | - | 0/10 | 0/10 | 0/10 | 0/10 | 0/10 | 0/10 |
| pFTP (V0) | - | 0.00 | 0.78 | 0.99 | 1.00 | 1.00 | 1.00 |

Table 7B.

| | | Cex-27 | Ex-181 | Ex-19 | Ex-20 |
|---|---|---|---|---|---|
| PC-3 | % | 88.95 | 88.9 | 88.8 | 88.7 |
| Rimar salt | % | 0.05 | 0.1 | 0.2 | 0.3 |
| TSAN | % | 0.5 | 0.5 | 0.5 | 0.5 |
| Release | % | 0.3 | 0.3 | 0.3 | 0.3 |
| Stabilizer | % | 0.05 | 0.05 | 0.05 | 0.05 |
| $H_3PO_3$ | % | 0.15 | 0.15 | 0.15 | 0.15 |
| Talc | % | 5 | 5 | 5 | 5 |
| Glass fiber | % | 5 | 5 | 5 | 5 |
| Talc:glass fiber ratio | | 1 | 1 | 1 | 1 |
| Acid:talc ratio | | 0.03 | 0.03 | 0.03 | 0.03 |
| Physical properties | | | | | |
| MVR | cc/10min | 19.7 | 20.7 | 20.1 | 19.5 |
| Vicat B120 | °C | 127 | 126 | 126 | 127 |
| INI @ RT | J/m | 59 | 62 | 59 | 56 |
| Flexural modulus | GPa | 3.3 | 3.3 | 3.3 | 3.4 |
| UL94 properties 1mm | | | | | |
| FOT 10 bars | sec. | 290 | 46 | 31 | 32 |
| No. of drips | - | 1/10 | 0/10 | 0/10 | 0/10 |
| pFTP (V0) | - | 0.00 | 1.00 | 1.00 | 1.00 |

The results showed that levels of at least 0.05 wt% are needed for robust FR performance at a thickness of 1.0 mm in both polycarbonates. Comparing the results of Table 7A to those of Table 7B, the lower molecular weight polymer also had lower INI, but higher MVR and equivalent flexural modulus for the same flame retardant additive loading. Higher Rimar concentrations are needed when the molecular weight of the polycarbonate is lower.

Examples 21-27

Four polycarbonates having different molecular weights were used to determine the effect. Table 8 shows the compositions and their results.

Table 8.

| | | Ex-21 | Ex-22 | Ex-23 | Ex-24 | Ex-25 | Ex-26 | Ex-27 |
|---|---|---|---|---|---|---|---|---|
| PC-1 | % | 41.75 | | | | | | |
| PC-2 | % | 41.75 | 88.65 | 44.325 | 44.325 | | | |
| PC-3 | % | | | 44.325 | | 88.65 | | |
| PC-4 | % | | | | 44.325 | | 88.65 | 88.65 |
| Rimar salt | % | 0.2 | 0.2 | 0.2 | 0.2 | 0.2 | 0.2 | 0.3 |
| TSAN | % | 0.5 | 0.5 | 0.5 | 0.5 | 0.5 | 0.5 | 0.5 |
| Release | % | 0.3 | 0.3 | 0.3 | 0.3 | 0.3 | 0.3 | 0.3 |
| UV stabilizer | % | 0.15 | 0.15 | 0.15 | 0.15 | 0.15 | 0.15 | 0.15 |
| Stabilizer | % | 0.05 | 0.05 | 0.05 | 0.05 | 0.05 | 0.05 | 0.05 |
| $H_3PO_3$ | % | 0.30 | 0.15 | 0.15 | 0.15 | 0.15 | 0.15 | 0.15 |
| Talc | % | 10 | 5 | 5 | 5 | 5 | 5 | 5 |
| Glass fiber | % | 5 | 5 | 5 | 5 | 5 | 5 | 5 |
| Talc:glass fiber ratio | | 2 | 1 | 1 | 1 | 1 | 1 | 1 |
| Acid:talc ratio | | 0.03 | 0.03 | 0.03 | 0.03 | 0.03 | 0.03 | 0.03 |
| Physical properties | | | | | | | | |
| MVR | cc/10min | 5.0 | 9.0 | 13.0 | 13.2 | 21.0 | 21.1 | 21.5 |
| Vicat B120 | °C | 144 | 142 | 140 | 140 | 138 | 138 | 138 |
| Flexural modulus | GPa | 4.2 | 3.5 | 3.5 | 3.5 | 3.4 | 3.5 | 3.5 |
| UL94 properties 1mm | | | | | | | | |
| FOT 5 bars | sec. | 25 | 22 | 14 | 19 | 21 | 40 | 12 |
| No. of drips | - | 0/5 | 0/5 | 0/5 | 0/5 | 0/5 | 0/5 | 0/5 |
| pFTP (V0) | - | 0.88 | 0.90 | 0.98 | 0.95 | 0.99 | 0.24 | 1.00 |

It is commonly known that lower polycarbonate molecular weight leads to poorer FR properties. However, in Table 8 V0 performance could be obtained over a wide range of molecular weights. The MVR value could be tailored by using polycarbonates of different molecular weights. In particular, the combination of high flow rates and V0 performance is unique. Again, higher Rimar salt concentrations are needed for polycarbonates of lower molecular weight.

Examples 28-32

The ratio of talc to glass fibers was varied to determine the effect. Table 9 shows the compositions and their results.

Table 9.

| | | Cex-28 | Cex-29 | Cex-30 | Ex-28 | Ex-29 | Ex-30 | Ex-31 | Ex-32 |
|---|---|---|---|---|---|---|---|---|---|
| PC-2 | % | 94.97 | 91.97 | 88.97 | 91.395 | 89.82 | 87.82 | 85.82 | 83.67 |
| Rimar salt | % | 0.2 | 0.2 | 0.2 | 0.2 | 0.2 | 0.2 | 0.2 | 0.2 |
| TSAN | % | 0.5 | 0.5 | 0.5 | 0.5 | 0.5 | 0.5 | 0.5 | 0.5 |

(continued)

| | | Cex-28 | Cex-29 | Cex-30 | Ex-28 | Ex-29 | Ex-30 | Ex-31 | Ex-32 |
|---|---|---|---|---|---|---|---|---|---|
| Release | % | 0.3 | 0.3 | 0.3 | 0.3 | 0.3 | 0.3 | 0.3 | 0.3 |
| Stabilizer | % | 0.03 | 0.03 | 0.03 | 0.03 | 0.03 | 0.03 | 0.03 | 0.03 |
| $H_3PO_3$ | % | | | | 0.075 | 0.15 | 0.15 | 0.15 | 0.3 |
| Talc | % | | | | 2.5 | 5 | 5 | 5 | 10 |
| Glass fiber | % | 4 | 7 | 10 | 5 | 4 | 6 | 8 | 5 |
| Talc:glass fiber ratio | | | | | 0.5 | 1.25 | 0.83 | 0.63 | 2.0 |
| Acid:talc ratio | | | | | 0.03 | 0.03 | 0.03 | 0.03 | 0.03 |
| Physical properties | | | | | | | | | |
| MVR | cc/10min | 13.0 | 11.0 | 10.0 | 10.0 | 10.0 | 7.0 | 7.0 | 7.0 |
| Vicat B120 | °C | 142 | 142 | 142 | 142 | 142 | 140 | 142 | 142 |
| Flexural modulus | GPa | 2.8 | 3.3 | 3.7 | 3.1 | 3.5 | 3.6 | 3.8 | 4.1 |
| UL94 properties 1mm | | | | | | | | | |
| FOT 5 bars | sec. | 58 | 71 | 101 | 35 | 21 | 22 | 34 | 25 |
| No. of drips | - | 4/5 | 3/5 | 0/5 | 0/5 | 0/5 | 0/5 | 0/5 | 0/5 |
| pFTP (V0) | - | 0.00 | 0.00 | 0.00 | 0.64 | 1.00 | 1.00 | 0.70 | 1.00 |

The results indicate that the talc:glass fiber ratio should be higher rather than lower, and is best when greater than 0.65 or greater than 0.8. Also, in the absence of talc, a low level of glass fibers (i.e. less than 10 wt%) will result in burning drips.

Examples 33-35

It is generally desirable to improve the impact properties for the compositions containing glass fibers and talc. However, the addition of traditional impact modifiers, such as ABS and MBS, is likely to lead to a loss in FR properties as a combustible component is added. Table 10 shows the effect of the addition of a polycarbonate-polysiloxane copolymer, which in the past has been used to simultaneously improve impact strength and FR properties. Table 10 shows the compositions and their results.

Table 10.

| | | Ex-33 | Ex-34 | Ex-35 |
|---|---|---|---|---|
| PC-2 | % | 88.82 | 82.82 | 76.82 |
| PC-ST | % | 0 | 6 | 12 |
| Rimar salt | % | 0.2 | 0.2 | 0.2 |
| TSAN | % | 0.5 | 0.5 | 0.5 |
| Release | % | 0.3 | 0.3 | 0.3 |
| Stabilizer | % | 0.03 | 0.03 | 0.03 |
| $H_3PO_3$ | % | 0.15 | 0.15 | 0.15 |
| Talc | % | 5 | 5 | 5 |
| Glass fiber | % | 5 | 5 | 5 |
| Talc:glass fiber ratio | | 1 | 1 | 1 |
| Acid:talc ratio | | 0.03 | 0.03 | 0.03 |

(continued)

| Physical properties | | | | |
|---|---|---|---|---|
| MVR | cc/10min | 11.2 | 10.6 | 10.5 |
| Vicat B120 | °C | 143 | 141 | 141 |
| ISO INI (3 mm) | $kJ/m^2$ | 14 | 21 | 25 |
| Flexural modulus | GPa | 3.6 | 3.4 | 3.2 |
| UL94 properties 1mm | | | | |
| FOT 10 bars | sec. | 28 | 57 | 59 |
| No. of drips | - | 0 | 0 | 0 |
| pFTP (V0) | - | 1.00 | 0.77 | 0.79 |

Surprisingly in this case, the addition of polycarbonate-polysiloxane copolymer (PC-ST), although the INI improved as expected, also deteriorated the FR properties, as reflected in the decreased pFTP with greater amounts of PC-ST. It is believed that as a result, at most 18 wt% of polycarbonate-polysiloxane copolymer should be used in the flame retardant thermoplastic compositions of the present disclosure.

Examples 39-46

Several different flame retardant additives were used to determine their effect. Table 11 shows the compositions and their results.

Table 11.

| | | Ex-39 | Ex-40 | Ex-41 | Ex-42 | Ex-43 | Ex-44 | Ex-45 | Ex-46 |
|---|---|---|---|---|---|---|---|---|---|
| PC-2 | % | 88.65 | 88.75 | 88.65 | 88.55 | 88.35 | 87.85 | 88.6 | 88.55 |
| TSAN | % | 0.5 | 0.5 | 0.5 | 0.5 | 0.5 | 0.5 | 0.5 | 0.5 |
| PETS | % | 0.3 | 0.3 | 0.3 | 0.3 | 0.3 | 0.3 | 0.3 | 0.3 |
| Phosphite | % | 0.05 | 0.05 | 0.05 | 0.05 | 0.05 | 0.05 | 0.05 | 0.05 |
| UV | % | 0.15 | 0.15 | 0.15 | 0.15 | 0.15 | 0.15 | 0.15 | 0.15 |
| $H_3PO_3$ | % | 0.15 | 0.15 | 0.15 | 0.15 | 0.15 | 0.15 | 0.15 | 0.15 |
| Talc | % | 5 | 5 | 5 | 5 | 5 | 5 | 5 | 5 |
| Glass fiber | % | 5 | 5 | 5 | 5 | 5 | 5 | 5 | 5 |
| Rimar salt | | 0.2 | | | | | | | |
| KSS | | | 0.1 | 0.2 | 0.3 | 0.5 | 1 | 0.2 | 0.2 |
| NaTS | | | | | | | | 0.05 | 0.1 |
| Physical properties | | | | | | | | | |
| MVR | cc/10min | 14.5 | 14.5 | 14.8 | 15.5 | 14.5 | 14.6 | 15.4 | 15.3 |
| UL94 properties 1mm | | | | | | | | | |
| FOT 10 bars | sec. | 37 | 139 | 157 | 76 | 129 | 148 | 59 | 65 |
| pFTP (V0) | - | 1.00 | 0.02 | 0.01 | 0.30 | 0.01 | 0.00 | 0.98 | 0.69 |
| V rating | | V0 | V1 | V1 | V0 | V1 | V1 | V0 | V0 |

As seen here, V0 performance could be obtained with Rimar salt, KSS, and a blend of KSS/NaTS. Interestingly, the FR performance with KSS peaked at 0.3 wt%, and the FR performance decreased at levels of 0.5 wt% and 1 wt%.

Examples 47-49

Three compositions were made and tested for V0 performance at various thicknesses, including 0.8 mm thickness. Table 12 shows the compositions and their results.

Table 12.

| | | Ex-47 | Ex-48 | Ex-49 |
|---|---|---|---|---|
| PC-2 | % | 88.8 | 33.8 | |
| PC-3 | % | | 55 | 88.65 |
| Rimar salt | % | 0.2 | 0.2 | 0.2 |
| TSAN | % | 0.5 | 0.5 | 0.5 |
| PETS | % | 0.3 | 0.3 | 0.3 |
| Phosphite | % | 0.05 | 0.05 | 0.05 |
| UV | % | 0.15 | 0.15 | 0.15 |
| $H_3PO_3$ | % | 0.15 | 0.15 | 0.15 |
| Talc | % | 5 | 5 | 5 |
| Glass fiber | % | 5 | 5 | 5 |
| Physical properties | | | | |
| MVR | cc/10min | 11 | 16 | 21 |
| Vicat B120 | °C | 144 | 141 | 138 |
| BPT @ 125°C | | Pass | Pass | Pass |
| ASTM INI | J/m | 86 | 70 | |
| ISO INI (3 mm) | $kJ/m^2$ | 7 | 6 | 5 |
| Flexural modulus | GPa | 3.5 | 3.5 | 3.4 |
| UL94 properties | | | | |
| 0.8 mm | FOT 5 bars | 22.6 | 28.4 | 32.3 |
| 0.8 mm | pFTP (V0) | 0.99 | 0.75 | 0.68 |
| 0.8 mm | V-rating | V0 | V0 | V0 |
| 1.0 mm | FOT 5 bars | 22.6 | 15.4 | 19 |
| 1.0 mm | pFTP (V0) | 0.82 | 1.0 | 1.0 |
| 1.0 mm | V-rating | V0 | V0 | V0 |
| 1.2 mm | FOT 5 bars | 5.7 | 5.2 | 9.1 |
| 1.2 mm | pFTP (V0) | 1.0 | 1.0 | 1.0 |
| 1.2 mm | V-rating | V0 | V0 | V0 |

The results showed that these compositions could attain V0 performance at a thickness of 0.8 mm. The combination of MVR, INI, and flexural modulus is good.

Examples 50-67

It is known that in some cases the color package, and specifically light colors, may deteriorate the FR properties. The 1mm V0 performance was therefore evaluated for "all colors", using three color packages (natural, agency dark and agency light) that are accepted by UL as covering the whole color space.

The Agency Light (AL) package included 3% coated $TiO_2$ (RMC 0895) and 0.03% Pigment Yellow 138 (RMC 145).

The Agency Dark (AD) package included 0.33% carbon black (RMC 070) and 0.33% Solvent Red 135 (RMC 165) and 0.33% Solvent Yellow 163 (RMC 147).

The Natural (NA) package contained no colorants at all.

Tables 13A, 13B, and 13C show the various compositions and their results.

Table 13A.

| | | Ex-50 | Ex-51 | EX-52 | Ex-53 | Ex-54 | Ex-55 |
|---|---|---|---|---|---|---|---|
| Color Package | | NA | AL | AD | NA | AL | AD |
| PC-1 | % | 41.835 | 38.805 | 40.845 | | | |
| PC-2 | % | 41.835 | 41.835 | 41.835 | 88.65 | 85.62 | 87.66 |
| Talc | % | 10 | 10 | 10 | 5 | 5 | 5 |
| Glass Fibers | % | 5 | 5 | 5 | 5 | 5 | 5 |
| $H_3PO_3$ | % | 0.3 | 0.3 | 0.3 | 0.15 | 0.15 | 0.15 |
| Rimar salt | % | 0.2 | 0.2 | 0.2 | 0.2 | 0.2 | 0.2 |
| TSAN | % | 0.5 | 0.5 | 0.5 | 0.5 | 0.5 | 0.5 |
| PETS | % | 0.3 | 0.3 | 0.3 | 0.3 | 0.3 | 0.3 |
| Phosphite | % | 0.03 | 0.03 | 0.03 | 0.05 | 0.05 | 0.05 |
| UV | % | | | | 0.15 | 0.15 | 0.15 |
| Talc:glass fiber ratio | | 2 | 2 | 2 | 1 | 1 | 1 |
| Physical properties | | | | | | | |
| MVR | cc/10min | 5.2 | 5.6 | 5.9 | 11.7 | 10.7 | 11.8 |
| Vicat B120 | °C | 143.8 | 142.7 | 141.6 | 142.2 | 138.5 | 138.1 |
| BPT @ 125°C | - | | | | Pass | Pass | Pass |
| INI (3 mm) | $kJ/m^2$ | 9 | 7 | 7 | 7 | 7 | 6 |
| Flexural modulus | GPa | 4.2 | 4.2 | 4.2 | 3.4 | 3.5 | 3.4 |
| UL94 properties 1mm | | | | | | | |
| FOT 5 bars | sec. | 25 | 30 | 21 | 23 | 30 | 24 |
| pFTP (V0) | - | 0.88 | 0.99 | 1.00 | 1.00 | 0.96 | 1.00 |
| V-rating | - | V0 | V0 | V0 | V0 | V0 | V0 |

Table 13B.

| | | Ex-56 | Ex-57 | Ex-58 | Ex-59 | Ex-60 | Ex-61 |
|---|---|---|---|---|---|---|---|
| Color Package | | NA | AL | AD | NA | AL | AD |
| PC-2 | % | 33.65 | 30.62 | 32.66 | 33.55 | 30.52 | 32.56 |
| PC-3 | % | 55 | 55 | 55 | 55 | 55 | 55 |
| Talc | % | 5 | 5 | 5 | 5 | 5 | 5 |
| Glass Fibers | % | 5 | 5 | 5 | 5 | 5 | 5 |
| $H_3PO_3$ | % | 0.15 | 0.15 | 0.15 | 0.15 | 0.15 | 0.15 |
| Rimar salt | % | 0.2 | 0.2 | 0.2 | 0.3 | 0.3 | 0.3 |
| TSAN | % | 0.5 | 0.5 | 0.5 | 0.5 | 0.5 | 0.5 |
| PETS | % | 0.3 | 0.3 | 0.3 | 0.3 | 0.3 | 0.3 |

(continued)

| | | Ex-56 | Ex-57 | Ex-58 | Ex-59 | Ex-60 | Ex-61 |
|---|---|---|---|---|---|---|---|
| Phosphite | % | 0.05 | 0.05 | 0.05 | 0.05 | 0.05 | 0.05 |
| UV | % | 0.15 | 0.15 | 0.15 | 0.15 | 0.15 | 0.15 |
| Talc:glass fiber ratio | | 1 | 1 | 1 | 1 | 1 | 1 |
| Physical properties | | | | | | | |
| MVR | cc/10min | 16.5 | 16.8 | 16.8 | 16.2 | 17.4 | 118.0 |
| UL94 properties 1mm | | | | | | | |
| FOT 5 bars | sec. | 36 | 37 | 24 | 27 | 29 | 25 |
| pFTP (V0) | - | 0.99 | 0.70 | 0.98 | 1.00 | 0.93 | 0.99 |
| V-rating | - | V0 | V0 | V0 | V0 | V0 | V0 |
| UL94 properties 1mm aged | | | | | | | |
| FOT 5 bars | sec. | 20 | 22 | 21 | 19 | 23 | 19 |
| pFTP (V0) | - | 1.00 | 1.00 | 1.00 | 1.00 | 1.00 | 1.00 |
| V-rating | - | V0 | V0 | V0 | V0 | V0 | V0 |

Table 13C.

| | | Ex-62 | Ex-63 | Ex-64 | Ex-65 | Ex-66 | Ex-67 |
|---|---|---|---|---|---|---|---|
| Color Package | | NA | AL | AD | NA | AL | AD |
| PC-3 | % | 88.65 | 85.62 | 87.66 | 88.55 | 85.52 | 87.56 |
| Talc | % | 5 | 5 | 5 | 5 | 5 | 5 |
| Glass Fibers | % | 5 | 5 | 5 | 5 | 5 | 5 |
| $H_3PO_3$ | % | 0.15 | 0.15 | 0.15 | 0.15 | 0.15 | 0.15 |
| Rimar salt | % | 0.2 | 0.2 | 0.2 | 0.3 | 0.3 | 0.3 |
| TSAN | % | 0.5 | 0.5 | 0.5 | 0.5 | 0.5 | 0.5 |
| PETS | % | 0.3 | 0.3 | 0.3 | 0.3 | 0.3 | 0.3 |
| Phosphite | % | 0.05 | 0.05 | 0.05 | 0.05 | 0.05 | 0.05 |
| UV | % | 0.15 | 0.15 | 0.15 | 0.15 | 0.15 | 0.15 |
| Talc:glass fiber ratio | | 1 | 1 | 1 | 1 | 1 | 1 |
| Physical properties | | | | | | | |
| MVR | cc/10min | 18.8 | 19.0 | 21.9 | 19.1 | 18.4 | 14.4 |
| Vicat B120 | °C | 138.2 | 137.7 | 137.2 | 138.2 | 138.1 | 136.6 |
| BPT @ 125°C | - | Pass | Pass | Pass | Pass | Pass | Pass |
| INI (3 mm) | $kJ/m^2$ | 6 | 6 | 6 | 5 | 6 | 5 |
| Flexural modulus | GPa | 3.5 | 3.4 | 3.4 | 3.3 | 3.5 | 3.4 |
| UL94 properties 1mm | | | | | | | |
| FOT 5 bars | sec. | 26.7 | 20.7 | 18.5 | 22.0 | 25.3 | 20.3 |
| pFTP (V0) | - | 0.96 | 0.98 | 0.99 | 0.99 | 1.00 | 0.99 |
| V-rating | - | V0 | V0 | V0 | V0 | V0 | V0 |

(continued)

| UL94 properties 1mm aged | | | | | | | |
|---|---|---|---|---|---|---|---|
| FOT 5 bars | sec. | 19.8 | 15.6 | 12.0 | 17.4 | 16.2 | 12.7 |
| pFTP (V0) | - | 1.00 | 1.00 | 1.00 | 1.00 | 1.00 | 1.00 |
| V-rating | - | V0 | V0 | V0 | V0 | V0 | V0 |

The results in Tables 13A and 13B show that colorants do not have a significant effect on the FR properties of the low to medium flow compositions. The results for the aged samples are even better than for the non-aged samples. The FR performance is not improved by addition of more Rimar salt, as the FT performance is already quite good at the low 0.2 wt% amount. On the other hand, in Table 13C, while V0 performance was obtained, the additional Rimar salt clearly improved the FOT values. In all, these results show that 1mm V0 performance can be easily and robustly obtained for all colors over an MVR flow range of 5 to 20 cc/10 min.

The present disclosure has been described with reference to exemplary embodiments. Obviously, modifications and alterations will occur to others upon reading and understanding the preceding detailed description. It is intended that the present disclosure be construed as including all such modifications and alterations insofar as they come within the scope of the appended claims or the equivalents thereof.

## Claims

**1.** A flame retardant thermoplastic composition, comprising:

a polycarbonate polymer;
at least 0.05 weight percent of a flame retardant additive;
glass fibers;
talc; and
an acid stabilizer; and
an anti-drip agent;
wherein the thermoplastic composition has a melt volume rate (MVR) of at least 4 cc/10 min when measured according to ISO 1133 at 300°C and a 1.2 kg load, and a flexural modulus of at least 3.0 GPa when measured according to ISO 178i
wherein the flame retardant additive is potassium perfluorobutane sulfonate, potassium diphenylsulfon-3-sulfonate, sodium toluene sulfonate, or combinations comprising at least one of the foregoing; and
wherein an article molded from the thermoplastic composition can attain UL94 V0 performance at a thickness of 1.2 mm.

**2.** The composition of Claim 1, comprising:

30 wt% to 95 wt% of the polycarbonate polymer;
0.05 wt% to 1.0 wt% of the flame retardant additive;
2 wt% to 35 wt% of the glass fibers;
2 wt% to 20 wt% of the talc;
0.005 wt% to 0.4 wt% of the acid stabilizer;
0.01 to 5 wt% of the anti-drip agent; and
zero to 70 wt% of a polycarbonate-polysiloxane copolymer.

**3.** The composition of Claim 2, wherein the polycarbonate-polysiloxane copolymer contains 4 wt% to 25 wt% of siloxane units; or wherein the composition contains up to 3.5 wt% of siloxane units.

**4.** The composition of any of Claims 1 - 3, further comprising greater than zero to at most 18 wt% of a polycarbonate-polysiloxane copolymer.

**5.** The composition of any of Claims 1 - 4, wherein the weight ratio of the talc to the glass fibers is greater than 0.1 and wherein the composition contains 9 to 25 wt% of the glass fibers and the talc combined.

6. The composition of any of Claims 1 - 5, wherein the ratio of the acid stabilizer to the talc is 0.06 mmol/gram talc to 0.3 mmol/gram talc.

7. The composition of any of Claims 1 - 6, wherein the acid stabilizer is phosphorous acid, phosphoric acid, zinc phosphate, zinc dihydrogen phosphate, mono sodium phosphate, sodium acid pyrophosphate, or a combination thereof.

8. The composition of any of Claims 1 - 7, wherein the composition has a notched Izod impact strength of 50 J/m or greater when measured at room temperature per ASTM D256; and wherein the composition contains 12 wt% or less of the glass fibers and the talc combined.

9. The composition of any of Claims 1 - 8, wherein the composition has a notched Izod impact strength of 5 to 25 $kJ/m^2$ when measured at room temperature and at a thickness of 3 mm per ISO 180.

10. The composition of any of Claims 1 - 9, wherein the polycarbonate polymer has a weight average molecular weight (Mw) of 15,000 to 35,000.

11. The composition of any of Claims 1 - 10, wherein the polycarbonate polymer is a blend of two or more polycarbonates having different weight average molecular weights.

12. The composition of any of Claims 1 - 11, wherein the flame retardant additive contains no chlorine and/or no bromine.

13. The composition of any of Claims 1 - 12, wherein the talc has a particle size of 0.5 nm to 2.0 micrometers.

14. The composition of any of Claims 1-13, wherein the anti-drip agent is PTFE, TSAN, PPE, silica, quartz, aluminum silicate, mica, alumina, aluminum hydroxide, calcium carbonate, silicon carbide, silicon nitride, boron nitride, titanium oxide, iron oxide, or a combination thereof.

15. An article molded from the thermoplastic composition of any of Claims 1 -14.

**Patentansprüche**

1. Eine flammenhemmende thermoplastische Zusammensetzung, die folgendes umfasst:

   ein Polycarbonatpolymer;
   mindestens 0,05 Gewichtsprozent eines flammenhemmenden Zusatzstoffs;
   Glasfasern;
   Talkum; und
   einen Säurestabilisator; und
   ein Antitropfmittel;
   worin die thermoplastische Zusammensetzung eine Schmelzvolumenrate (MVR) von mindestens 4 cc/10 Minuten hat, wenn gemäß ISO 1133 bei 300°C und einer 1,2 kg Beladung gemessen, und einen Elastizitätsmodul von mindestens 3,0 GPa, wenn gemäß ISO 178 gemessen;
   worin der flammenhemmende Zusatzstoff Kaliumperfluorbutansulfonat, Kaliumdiphenylsulfon-3-sulfonat, Natriumtoluensulfonat, oder Kombinationen umfassend mindestens eines der zuvor genannten ist; und
   worin ein Artikel geformt aus der thermoplastischen Zusammensetzung eine UL94 V0 Leistung bei einer Dicke von 1,2 mm erzielen kann.

2. Die Zusammensetzung gemäß Anspruch 1, die folgendes umfasst:

   30 Gewichtsprozent bis 95 Gewichtsprozent von dem Polycarbonatpolymer;
   0,05 Gewichtsprozent bis 1,0 Gewichtsprozent von dem flammenhemmenden Zusatzstoff;
   2 Gewichtsprozent bis 35 Gewichtsprozent von den Glasfasern;
   2 Gewichtsprozent bis 20 Gewichtsprozent von dem Talkum;
   0,005 Gewichtsprozent bis 0,4 Gewichtsprozent von dem Säurestabilisator;
   0,01 bis 5 Gewichtsprozent von dem Antitropfmittel; und
   null bis 70 Gewichtsprozent von einem Polycarbonat-Polysiloxan-Copolymer.

3. Die Zusammensetzung gemäß Anspruch 2, worin das Polycarbonat-Polysiloxan-Copolymer 4 Gewichtsprozent bis 25 Gewichtsprozent Siloxaneinheiten enthält; oder worin die Zusammensetzung bis zu 3,5 Gewichtsprozent Siloxaneinheiten enthält.

4. Die Zusammensetzung gemäß irgendeinem der Ansprüche 1-3, weiter umfassend mehr als null bis höchstens 18 Gewichtsprozent eines Polycarbonat-Polysiloxan-Copolymers.

5. Die Zusammensetzung gemäß irgendeinem der Ansprüche 1-4, worin das Gewichtsverhältnis von dem Talkum zu den Glasfasern größer als 0,1 ist, und worin die Zusammensetzung 9 bis 25 Gewichtsprozent der Glasfasern und des Talkums kombiniert enthält.

6. Die Zusammensetzung gemäß irgendeinem der Ansprüche 1-5, worin das Verhältnis des Säurestabilisators zu dem Talkum 0,06 mmol/Gramm Talkum bis 0,3 mmol/Gramm Talkum ist.

7. Die Zusammensetzung gemäß irgendeinem der Ansprüche 1-6, worin der Säurestabilisator phosphorige Säure, Phosphorsäure, Zinkphosphat, Zinkdihydrogenphosphat, Mono-Natriumphosphat, Natriumsäurepyrophosphat, oder eine Kombination daraus, ist.

8. Die Zusammensetzung gemäß irgendeinem der Ansprüche 1-7, worin die Zusammensetzung eine Izod-Kerbschlagzähigkeit von 50 J/m oder größer hat, wenn bei Raumtemperatur per ASTM D256 gemessen; und worin die Zusammensetzung 12 Gewichtsprozent oder weniger der Glasfasern und des Talkums kombiniert enthält.

9. Die Zusammensetzung gemäß irgendeinem der Ansprüche 1-8, worin die Zusammensetzung eine Izod-Kerbschlagzähigkeit von 5 bis 25 $kJ/m^2$ hat, wenn bei Raumtemperatur und bei einer Dicke von 3 mm per ISO 180 gemessen.

10. Die Zusammensetzung gemäß irgendeinem der Ansprüche 1-9, worin das Polycarbonat-Polymer ein Gewichtsmittel Molekulargewicht (Mw) von 15,000 bis 35,000 hat.

11. Die Zusammensetzung gemäß irgendeinem der Ansprüche 1-10, worin das Polycarbonat-Polymer eine Mischung aus zwei oder mehr Polycarbonaten mit unterschiedlichen Gewichtsmittel Molekulargewichten ist.

12. Die Zusammensetzung gemäß irgendeinem der Ansprüche 1-11, worin der flammenhemmende Zusatzstoff kein Chlor und/oder kein Brom enthält.

13. Die Zusammensetzung gemäß irgendeinem der Ansprüche 1-12, worin das Talkum eine Partikelgröße von 0,5 nm bis 2,0 Mikrometern hat.

14. Die Zusammensetzung gemäß irgendeinem der Ansprüche 1-13, worin das Antitropfmittel PTFE, TSAN, PPE, Siliziumdioxid, Quartz, Aluminiumsilikat, Glimmererde, Tonerde, Aluminiumhydroxid, Kalziumcarbonat, Siliziumcarbid, Siliziumnitrid, Bornitrid, Titanoxid, Eisenoxid, oder eine Kombination daraus ist.

15. Ein Artikel geformt aus der thermoplastischen Zusammensetzung gemäß irgendeinem der Ansprüche 1-14.

## Revendications

1. Composition thermoplastique ignifuge comprenant :

   un polymère de polycarbonate ;
   au moins 0,05 % en poids d'un additif ignifuge ;
   des fibres de verre ;
   du talc ; et
   un stabilisant acide ; et
   un agent anti-goutte ;

   laquelle composition thermoplastique a un indice de fluidité en volume (MVR) d'au moins 4 $cm^3$/10 min quand il est mesuré conformément à la norme ISO 1133 à 300°C et sous une charge de 1,2 kg, et un module de flexion d'au moins 3,0 GPa quand il est mesuré conformément à la norme ISO 178 ;

dans laquelle l'additif ignifuge est le perfluorobutanesulfonate de potassium, le diphénylsulfone-3-sulfonate de potassium, le toluènesulfonate de sodium, ou des combinaisons comprenant au moins l'un des précédents ; et
dans laquelle un article moulé à partir de la composition thermoplastique peut atteindre la performance UL94 V0 avec une épaisseur de 1,2 mm.

**2.** Composition selon la revendication 1, comprenant :

30 % en poids à 95 % en poids du polymère de polycarbonate ;
0,05 % en poids à 1,0 % en poids de l'additif ignifuge ;
2 % en poids à 35 % en poids des fibres de verre ;
2 % en poids à 20 % en poids du talc ;
0,005 % en poids à 0,4 % en poids du stabilisant acide ;
0,01 à 5 % en poids de l'agent anti-goutte ; et
zéro à 70 % en poids d'un copolymère de polycarbonate-polysiloxane.

**3.** Composition selon la revendication 2, dans laquelle le copolymère de polycarbonate-polysiloxane contient de 4 % en poids à 25 % en poids de motifs siloxane ; ou laquelle composition contient jusqu'à 3,5 % en poids de motifs siloxane.

**4.** Composition selon l'une quelconque des revendications 1 à 3, comprenant en outre de plus de zéro jusqu'à 18 % en poids au plus d'un copolymère de polycarbonate-polysiloxane.

**5.** Composition selon l'une quelconque des revendications 1 à 4, dans laquelle le rapport en poids du talc aux fibres de verre est supérieur à 0,1, et laquelle composition contient 9 à 25 % en poids des fibres de verre et du talc combinés.

**6.** Composition selon l'une quelconque des revendications 1 à 5, dans laquelle le rapport du stabilisant acide est de 0,06 mmol/gramme de talc à 0,3 mmol/gramme de talc.

**7.** Composition selon l'une quelconque des revendications 1 à 6, dans laquelle le stabilisant acide est l'acide phosphoreux, l'acide phosphorique, le phosphate de zinc, le dihydrogénophosphate de zinc, le phosphate monosodique, le pyrophosphate acide de sodium, ou une combinaison de ceux-ci.

**8.** Composition selon l'une quelconque des revendications 1 à 7, laquelle composition a une résistance au choc Izod sur barreau entaillé de 50 J/m ou plus quand elle est mesurée à la température ambiante conformément à la norme ASTM D256 ; et laquelle composition contient 12 % en poids ou moins des fibres de verre et du talc combinés.

**9.** Composition selon l'une quelconque des revendications 1 à 8, laquelle composition a une résistance au choc Izod sur barreau entaillé de 5 à 25 $kJ/m^2$ quand elle est mesurée à la température ambiante et pour une épaisseur de 3 mm conformément à la norme ISO 180.

**10.** Composition selon l'une quelconque des revendications 1 à 9, dans laquelle le polymère de polycarbonate a une masse moléculaire moyenne en masse (Mw) de 15 000 à 35 000.

**11.** Composition selon l'une quelconque des revendications 1 à 10, dans laquelle le polymère de polycarbonate est un mélange de deux ou plus de deux polycarbonates ayant des masses moléculaires moyennes en masse différentes.

**12.** Composition selon l'une quelconque des revendications 1 à 11, dans laquelle l'additif ignifuge ne contient pas de chlore et/ou pas de brome.

**13.** Composition selon l'une quelconque des revendications 1 à 12, dans laquelle le talc a une granulométrie de 0,5 nm à 2,0 micromètres.

**14.** Composition selon l'une quelconque des revendications 1 à 13, dans laquelle l'agent anti-goutte est le PTFE, le TSAN, le PPE, la silice, le quartz, le silicate d'aluminium, le mica, l'alumine, l'hydroxyde d'aluminium, le carbonate de calcium, le carbure de silicium, le nitrure de silicium, le nitrure de bore, l'oxyde de titane, l'oxyde de fer, ou une combinaison de ceux-ci.

**15.** Article moulé à partir de la composition thermoplastique de l'une quelconque des revendications 1 à 14.